(19) Europäisches Patentamt
European Patent Office
Office européen des brevets

(11) **EP 4 667 500 A1**

(12) **EUROPEAN PATENT APPLICATION**

(43) Date of publication:
**24.12.2025 Bulletin 2025/52**

(21) Application number: **24183823.4**

(22) Date of filing: **21.06.2024**

(51) International Patent Classification (IPC):
***C08B 37/00** (2006.01)* ***A61K 31/733** (2006.01)*

(52) Cooperative Patent Classification (CPC):
**C08B 37/006; A61K 31/733**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Biopract GmbH**
**12489 Berlin (DE)**

(72) Inventor: **The designation of the inventor has not yet been filed**

(74) Representative: **Schulz Junghans Patentanwälte PartGmbB**
**Großbeerenstraße 71**
**10963 Berlin (DE)**

(54) **FRUCTOOLIGOSACCHARIDE DERIVATIVES AND USES THEREOF**

(57) The present invention relates to esterified levan oligosaccharides and to a method for their production. The levan is reacted with a carboxylic acid moiety yielding an ester of the carboxylic acid and a primary OH group of the levan. The invention further relates to the use of the esterified levan as a prebiotic and in animal feeding.

Fig. 1

A

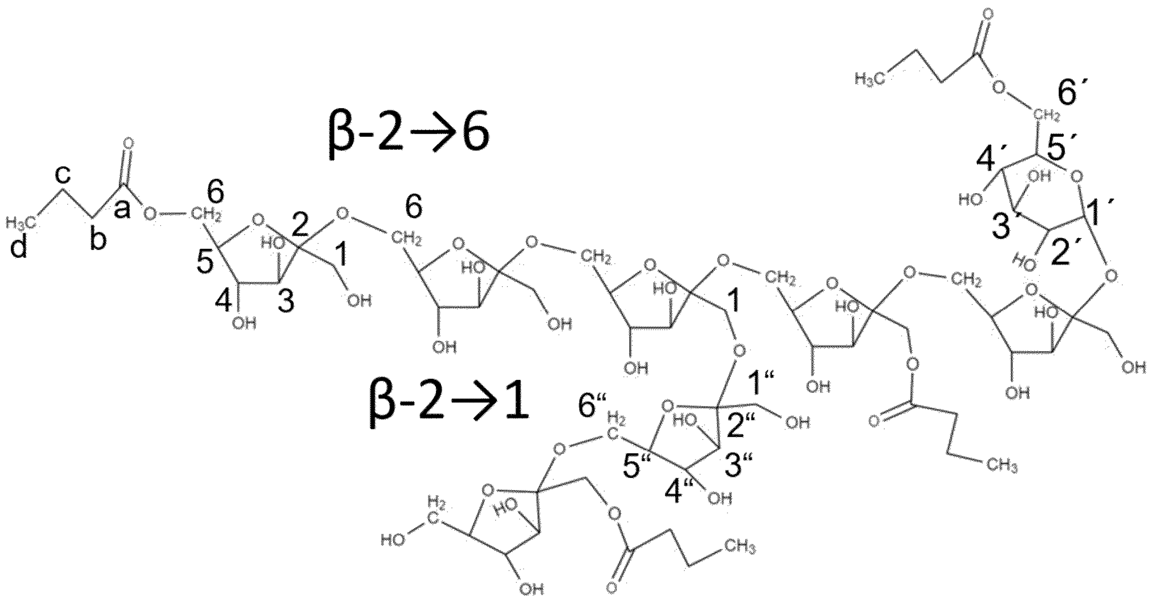

B

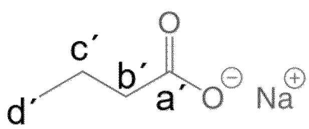

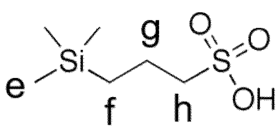



Processed by Luminess, 75001 PARIS (FR)

## Description

Field

The present invention relates to esterified levan oligosaccharides and to their production method. The levan is reacted with a carboxylic acid moiety yielding an ester of the carboxylic acid and a primary OH group of the levan. The invention further relates to the use of the esterified levan as a prebiotic and in animal feeding.

Background

Fructooligosaccharides (FOS), also known as oligofructose, can be classified into two groups according to the glycosidic linkages present: inulin-type fructooligosaccharide (IFOS) comprise linear chains of β-2,1-linked fructoses, while levan-type fructooligosaccharide (LFOS) are branched fructans with β-2,6-glycosidic bonds at the mainchain and β-2,1-glycosidic bonds connecting sidechains.

FOS exist as commercial preparations since the 1980's. Most of the preparations are extracted from plants with hot water (Jerusalem artichoke/Topinambur, chicory), yielding inulin. Inulin can be partially hydrolyzed to form low molecular oligosaccharides having a degree of polymerization in the range of [4-30] or even [3-10]. Such preparations are marketed under the names "Raftiline®", "Raftilose®" or "Orafti®". Further, fructo-oligosaccharides can be produced from sucrose by enzymatic synthesis using a fungi fructosyltransferase (e.g. *Aspergillus niger*) yielding mainly the low-molecular tri- tetra- and pentasaccharides kestose, nystose and fructosyl nystose. The preparations of this kind are known under the name "ProFeed®" or "Actilight®". Smaller molecular weight molecules have the general advantages of higher solubility and diffusion and higher number of molecules for a given mass as well.

These products are currently applied as prebiotics in food and feed. According to the "International Scientific Association for Probiotics and Prebiotics (ISAPP)", the current consensus definition of a prebiotic is: "a substrate that is selectively utilized by host microorganisms conferring a health benefit". Thus, the concept includes three essential parts: a substance, a physiologically beneficial effect, and a microbiota-mediated mechanism.

Due to their oligomeric structure, the molecules cannot be metabolized by digestive enzymes and remain in the intestinal lumen. They may serve as a selective carbon source for given bacterial species present in the gut, the collection of which is called "intestinal microbiome". It is postulated that fructooligosaccharides promote the growth of beneficial bacteria strains, yielding benefits for the animal host in terms of health and growth and reducing the damaging influence of potentially pathogenic strains. This concept was subject of numerous studies confirming its validity. Prebiotics are currently applied in human food, pet food and animal feed in critical phases (breeding sows, piglets). Their action requires rather high application dosages (0,1-1 %). Therefore, their application is limited to the cases where 1) food price is not limiting and 2) animal health is a critical economic factor and/or the animals consume less feed. These factors limit the massive use of prebiotics for breeding adult animals.

The commercial products act as a carbon source for bacteria mainly in the large intestine, the final part of the gut. This final stage of the digestion offers limited interaction between microbiota and host due to the small wall surface of the large intestine, whose role is mainly the resorption of water and electrolytes.

To circumvent this drawback, one possibility is to design novel prebiotic molecules displaying altered physical-chemical properties which could produce an interaction at an earlier stage of digestion. In the small intestine (ileum and jejunum) the wall surface is much larger and the digestion and interactions between host and microbiome are more intensive.

The goal of the study on which the present specification is based, was to design, produce and test functionalized fructo-oligosaccharides of levan type (further referred to herein as fFOS) which display such altered properties in comparison to conventional inulin oligosaccharides. Thus, the novel fFOS may act as prebiotics more intensively in the small intestine and consequently at low dosages.

The alteration of the molecules can be achieved by 1) changing the fructose chain of the oligosaccharides e.g. β(2-6) linkages instead of β(2-1) and 2) introducing substituting groups e.g. by esterification of the alcohol groups. Depending on the chosen substituent group, several properties can be introduced. By using fatty acid or aryl groups, the molecules can become lipophilic. By using multi acidic groups, the fFOS become ionized. Furthermore, during the metabolization of the fFOS by bacteria, the substituents are released and can develop their own activity, for example as nutrient for gut cells or as antibiotic (e.g. using benzoic acid as substituent).

Based on the above-mentioned state of the art, the objective of the present invention is to provide means and methods to produce esterified levan, and to its use in feeding and as a prebiotic. This objective is attained by the subject-matter of the independent claims of the present specification, with further advantageous embodiments described in the dependent claims, examples, figures and general description of this specification.

Summary of the Invention

Broadly, the invention relates to levan esters of fatty acids, dicarboxylic acids and/or benzoic acids, as well as methods of synthesis and uses of the levan esters of the invention.

A first aspect of the invention relates to a levan, bearing carboxylic acids connected to the levan by ester bond on C1 and or C6 of a fructose constituent moiety of the levan. The degree of substitution ranges from 0.2 to 1.0.

An alternative of this first aspect of the invention relates to a compound described by a formula (I)

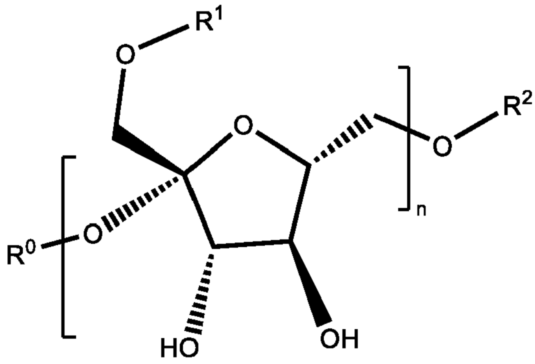

(I)

wherein

- $R^0$ is selected from H and a carbohydrate, wherein the carbohydrate is selected from
  - a carbohydrate comprising a primary OH group when present in cyclic conformation, selected from the group of glucose, galactose, maltose, lactose, and wherein the carbohydrate optionally may be modified with $R^2$ at the primary OH group; or
  - a carbohydrate comprising no primary OH group when present in cyclic conformation, selected from the group of xylose and arabinose;
- $R^2$ is selected from the group of H, and an ester moiety;
- n is an integer selected from 1 to 60;
- each $R^1$ is independently selected from the group of H, a moiety of formula (II) and said ester moiety;

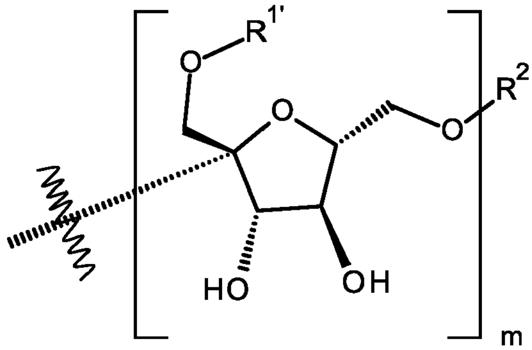

(II)

wherein
- $R^{1'}$ has the same definition as $R^1$;
- m is an integer selected from the group of 0 to 59;
- said ester moiety is an ester of a moiety selected from the group of a fatty acid, an unsubstituted benzoic acid, an OH-substituted benzoic acid, and a dicarboxylic acid;

wherein

- the degree of polymerization of said compound is 4 to 60;
- the degree of substitution of said compound is 0.2 to 1.0;

- the degree of branching of said compound is 0.0 to 0.8.

A second aspect of the invention relates to the use of the compound according to the first aspect in preparation of a feed.
An alternative of the second aspect of the invention relates to the use of the compound according to the first aspect as a prebiotic.
A third aspect of the invention relates to a method for production of the compound according to the first aspect.

*Terms and definitions*

For purposes of interpreting this specification, the following definitions will apply and whenever appropriate, terms used in the singular will also include the plural and vice versa. In the event that any definition set forth below conflicts with any document incorporated herein by reference, the definition set forth shall control.
The terms "comprising", "having", "containing", and "including", and other similar forms, and grammatical equivalents thereof, as used herein, are intended to be equivalent in meaning and to be open-ended in that an item or items following any one of these words is not meant to be an exhaustive listing of such item or items, or meant to be limited to only the listed item or items. For example, an article "comprising" components A, B, and C can consist of (i.e., contain only) components A, B, and C, or can contain not only components A, B, and C but also one or more other components. As such, it is intended and understood that "comprises" and similar forms thereof, and grammatical equivalents thereof, include disclosure of embodiments of "consisting essentially of" or "consisting of."
Where a range of values is provided, it is understood that each intervening value, to the tenth of the unit of the lower limit, unless the context clearly dictates otherwise, between the upper and lower limit of that range and any other stated or intervening value in that stated range, is encompassed within the disclosure, subject to any specifically excluded limit in the stated range. Where the stated range includes one or both of the limits, ranges excluding either or both of those included limits are also included in the disclosure.
Reference to "about" a value or parameter herein includes (and describes) variations that are directed to that value or parameter per se. For example, description referring to "about X" includes description of "X."
As used herein, including in the appended claims, the singular forms "a", "or" and "the" include plural referents unless the context clearly dictates otherwise.
"And/or" where used herein is to be taken as specific recitation of each of the two specified features or components with or without the other. Thus, the term "and/or" as used in a phrase such as "A and/or B" herein is intended to include "A and B," "A or B," "A" (alone), and "B" (alone). Likewise, the term "and/or" as used in a phrase such as "A, B, and/or C" is intended to encompass each of the following aspects: A, B, and C; A, B, or C; A or C; A or B; B or C; A and C; A and B; B and C; A (alone); B (alone); and C (alone).
Unless defined otherwise, all technical and scientific terms used herein have the same meaning as commonly understood by one of ordinary skill in the art (e.g., in cell culture, molecular genetics, nucleic acid chemistry, hybridization techniques and biochemistry, organic synthesis). Standard techniques are used for molecular, genetic, and biochemical methods (see generally, Sambrook et al., Molecular Cloning: A Laboratory Manual, 4th ed. (2012) Cold Spring Harbor Laboratory Press, Cold Spring Harbor, N.Y. and Ausubel et al., Short Protocols in Molecular Biology (2002) 5th Ed, John Wiley & Sons, Inc.) and chemical methods.
The term *degree of polymerization* in the context of the present specification relates to the number of monosaccharide moieties -particularly fructose moieties- within one molecule.
The term *degree of substitution* in the context of the present specification relates to the number of ester moieties divided by the number of fructose moieties within one molecule.
The term *degree of branching* in the context of the present specification relates to the number of $R^1$ or $R^{1'}$ being of formula (II) divided by the number of fructose moieties within one molecule. Thus, if 50% of $R^1$ or $R^{1'}$ are of formula (II), the degree of branching is 0.5. If all $R^1$ are H or an ester moiety (and there is no moiety of formula (II)), the degree of branching is 0.0. If all $R^1$ and $R^{1'}$ are of formula (II), and all n and m are 1, the degree of branching is 1.0.
The term *fatty acid* in the context of the present specification relates to is a carboxylic acid with an aliphatic chain, which is either saturated or unsaturated, and branched or not branched. The esterified version of a fatty acid is a moiety of formula [levan]-O-C(=O)-(aliphatic hydrocarbon chain). The fatty acid may comprise 1 C atom to 26 C atoms. Particular embodiments of a fatty acid as recited herein include a C4, C6, C8, C10, C12, C14, C16, C18 or C20 saturated, monounsaturated (Z/cis) or di-unsaturated (Z/cis) fatty acid. In other particular embodiments, the fatty acid is selected from the group of lauric acid, myristic acid, palmitic acid, stearic acid, arachidic acid, myristoleic acid, palmitoleic acid, oleic acid, linoleic acid, a-linoleic acid and arachidonic acid.
The term *benzoic acid* in the context of the present specification relates to C6-aryl which is substituted with a carboxylic acid, and may be not further substituted or further substituted by one or several OH-groups. The esterified version of a fatty acid is a moiety of formula [levan]-O-C(=O)-(C6 aryl).

The term "levan" in the context of the present specification relates to a naturally occurring fructose polymer (fructan). Levan is present in many plants and microorganisms and consists of fructose monomers that are connected by 2,6 beta glycosidic linkages. Levan can have both branched and linear structures of relatively low molecular weight. Branched levan forms a very small, sphere-like structure with basal chains 9 units long. The 2,1 branching allows methyl ethers to form and create a spherical shape. The ends of levan also tend to contain a glucosyl residue.

The term *dicarboxylic acid* in the context of the present specification relates to an aliphatic hydrocarbon chain comprising two carboxylic functionalities. The esterified version of dicarboxylic acid has one carboxylic acid moiety and one esterified moiety of formula [levan]-O-C(=O)-(hydrocarbon chain with carboxylic acid moiety).

The term *prebiotic* in the context of the present specification relates to a substrate that is selectively utilized by host microorganisms conferring a health benefit. Without wishing to be bound by theory, the inventors assume that the compound of the invention is hydrolysed by beneficial bacteria in the gut, and the product of the hydrolysis serves as a nourishment for gut epithelial cells, and to have an antibacterial effect on harmful gut bacteria.

The term *an activated form* of a *carboxylic acid* in the context of the present specification relates to a carboxylic acid where the hydroxyl group is replaced with a substituent resulting in a better electrophile. The activated form of a carboxylic acid can be described by the formula [Leaving group]-C(=O)-(aliphatic hydrocarbon chain). One non-limiting example of such an activated carboxylic acid is a vinyl ester of a carboxylic acid as described by the formula:

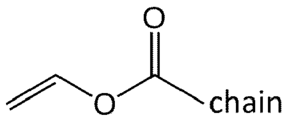

Other known activated forms include esters of N-hydroxysuccinimide.

The term *Deep Eutectic Solvents (DES)* in the context of the present specification relates to eutectics prepared by mixing a hydrogen bond acceptor (HBA) and a hydrogen bond donor (HBD) with simultaneous heating and stirring until a liquid is formed. The DES remains a liquid at ambient temperature due to the formation of intermolecular hydrogen bonds, leading to a decreased freezing point. The DES can solubilize both carbohydrates (hydrophilic) and fatty acids (hydrophobic) both in high concentration with minimal amount of water. Both reactants are solubilized and can react with the enzyme. The water content and the water activity are low; this favorizes the synthesis reaction and prevents hydrolysis of the newly formed FOS-esters (so-called reverse hydrolysis). In the DES, the carbohydrates are part of the solvent system.

The term *derived from* in the context of the present specification relates to an amino acid sequence of the enzyme in question which has an identity of ≥85%, particularly of ≥90%, more particularly of ≥95% with the referenced enzyme where it is derived from. The enzymes are produced according to complex modern methods of industrial enzyme production (genetic optimization of the strains, fermentation, separation of the supernatant, concentration). Additionally, the enzyme may be immobilized on a solid porous support.

The term *molecular sieve* in the context of the present specification relates to a crystalline substance with pores of molecular dimensions which permit the passage of molecules below a certain size. Molecular sieve adsorbents may be crystalline aluminosilicates, known as zeolites. Their unique structure allows the water of crystallization to be removed, leaving a porous crystalline structure. These pores, or cages, have a high affinity to re-adsorb water.

The term *water activity* in the context of the present specification relates to the ratio of the vapor pressure of water in a material (p) to the vapor pressure of pure water (po) at the same temperature. The definition of $a_w$ (water activity) is where $p$ is the partial water vapor pressure in equilibrium with the solution, and $p^*$ is the (partial) vapor pressure of pure water at the same temperature.

Any patent document cited herein shall be deemed incorporated by reference herein in its entirety.

<u>Detailed Description of the Invention</u>

The invention relates to levan oligosaccharides that are esterified with a moiety selected from the group of a fatty acid, an unsubstituted benzoic acid, an OH-substituted benzoic acid, and a dicarboxylic acid. This esterification takes place at the primary OH groups ($CH_2OH$, the C1 and C6 of the constituent fructose moieties) of the levan molecule. Esterification is a statistical process wherein certain primary OH groups are modified, while others are not. The "degree of substitution" indicates how many of the primary OH group are modified with the moiety selected from the group of a fatty acid, an unsubstituted benzoic acid, an OH-substituted benzoic acid, and a dicarboxylic acid.

*Compound*

A first aspect of the invention relates to an ester of a levan polysaccharide and a carboxylic acid, a compound

described by a formula (I)

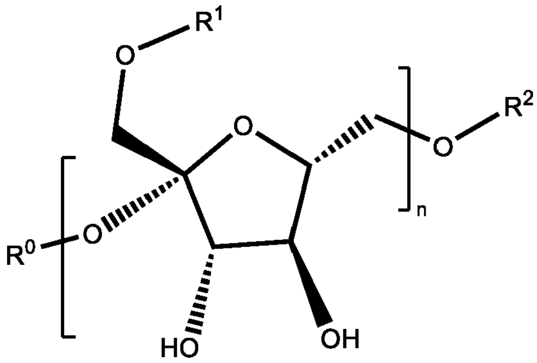

(I).

$R^0$ is selected from H and a carbohydrate. The carbohydrate is selected from the group consisting of glucose, galactose, maltose, lactose, xylose, arabinose.

The chain of n molecules represented in formula (I) represents the β2,6 link of the main chain.

Carbohydrates comprising, when present in the cyclic conformation, a primary OH group are glucose, galactose, maltose, lactose. In this case, the carbohydrate optionally may be modified with an ester as indicated for substituent $R^2$ below, at the primary OH group. Carbohydrates comprising no primary OH group are xylose, arabinose. The skilled person understands that reference to primary OH group content is made with regard to the cyclic form of a sugar molecule.

$R^2$ is selected from the group of hydrogen, and an ester moiety as defined as follows:

The ester moiety is an ester of a moiety selected from the group of a fatty acid, an unsubstituted benzoic acid, an OH-substituted benzoic acid, and a dicarboxylic acid. The term "ester moiety" is synonymous, in the context of formula (I), with acyl moiety -C(O)$R^3$, with $R^3$ selected from C3 to C21 linear unsubstituted alkyl, alkenyl or carboxyalkyl, phenyl and hydroxy-substituted phenyl.

A free fatty acid is described by the formula:

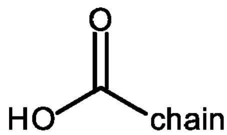

As an ester moiety, the fatty acid is described by the formula:

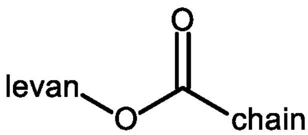

A free unsubstituted benzoic acid is of the formula:

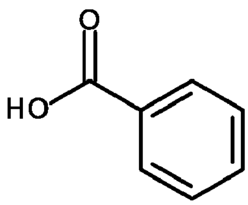

As an ester moiety, the unsubstituted benzoic acid is of the formula:

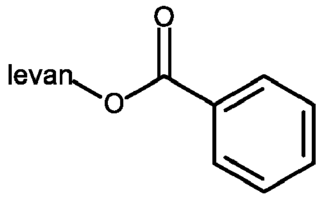

.

n is an integer selected from any integer in the range from 1 to 60. In certain embodiments, n is an integer from 2 to 50. In other embodiments, n is an integer from 5 to 40. In certain embodiments, n is an integer from 10 to 50.

In (I), each $R^1$ is independently selected from the group of hydrogen, or a moiety of formula (II) as defined below, and the ester moiety as defined for $R^2$ above;

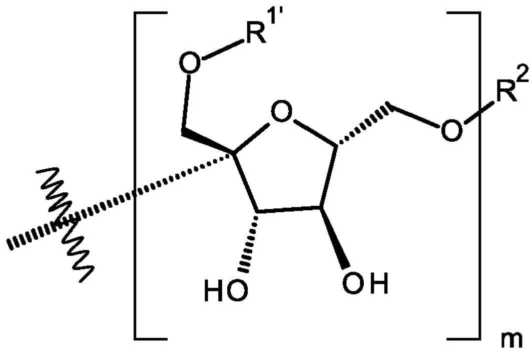

(II)

wherein

- $R^{1'}$ has the same definition as $R^1$ (each $R^{1'}$ is independently selected from the group of hydrogen, a moiety of formula (II) and the ester moiety).
- m is an integer selected from the group of 0 to 59;
- $R^2$ is defined as for formula (I).

In other words, where R1 is not H, the molecule is β2-1 linked.

The degree of polymerization of the compound, i.e. the number of fructose moieties within one levan molecule, is 4 to 60. In certain embodiments, the degree of polymerization of the compound is 4 to 30. In certain embodiments, the degree of polymerization of the compound is 4 to 10. In certain embodiments, the degree of polymerization of the compound is 8 to 15.

The degree of substitution of said compound with formula (III), calculated as the number of ester moieties divided by the number of fructose moieties within one molecule, is 0.2 to 1.0. In certain embodiments, the degree of substitution of the compound with formula (III) is 0.2 to 0.6. In certain embodiments, the degree of substitution of the compound with formula (III) is 0.3 to 0.4.

The degree of branching of said compound is 0.0 to 0.8. In certain embodiments, the degree of branching of said compound is 0.0 to 0.5. In certain embodiments, the degree of branching of said compound is 0.1 to 0.3.

A compound which is characterized by n being 1 and each m being 1 is not encompassed by the present invention (it is disclaimed).

In certain embodiments, the ester moiety is described by formula (III)

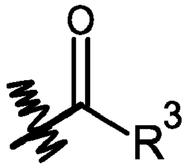

(III)

wherein

- $R^3$ is selected from the group of

  - $-(CH_2)_p-CH_3$ with p being an integer selected from the group of 0, 1, 2, 3, 4, 5, 6, 7, 8, 9, 10, 11, 12, 13, 14, 15, 16, 17;
  - unsubstituted or OH-substituted phenyl, particularly unsubstituted or OH-monosubstituted phenyl;
  - $-CH_2-CH_2-COO^-$;
  - $-(CH_2)_q-(CH=CH-(CH_2))_r-(CH_2)_s-CH_3$ with q being an integer selected from the group of 3 to 9 and with r being an integer selected from the group of 1, 2, 3, 4, 5 and with s being an integer selected from the group of 0 to 7.

In certain embodiments, $R^3$ is $-(CH_2)_p-CH_3$ with p being an integer selected from the group of 0, 1, 2, 3, 4, 5, 6, 7, 8, 9, 10, 11, 12, 13, 14, 15, 16, 17. In certain embodiments, $R^3$ is unsubstituted or OH-substituted phenyl, particularly unsubstituted or OH-monosubstituted phenyl. In certain embodiments, $R^3$ is $-CH_2-CH_2-COO^-$.

In certain embodiments, $R^0$ is selected from the group of glucose, galactose, maltose, lactose. In certain embodiments, $R^0$ is glucose. In certain embodiments, $R^0$ is galactose. In certain embodiments, $R^0$ is maltose. In certain embodiments, $R^0$ is lactose.

In certain embodiments, $R^3$ is selected from the group of phenyl, $-CH_2-CH_2-COO^-$, and $-(CH_2)_p-CH_3$ with p being an integer selected from the group of 0, 1, 2, 6, 10. In certain embodiments, $R^3$ is $-(CH_2)_2-CH_3$.

*Example structures*

As a non-limiting example, the following formula should illustrate the architecture of the claimed compound:

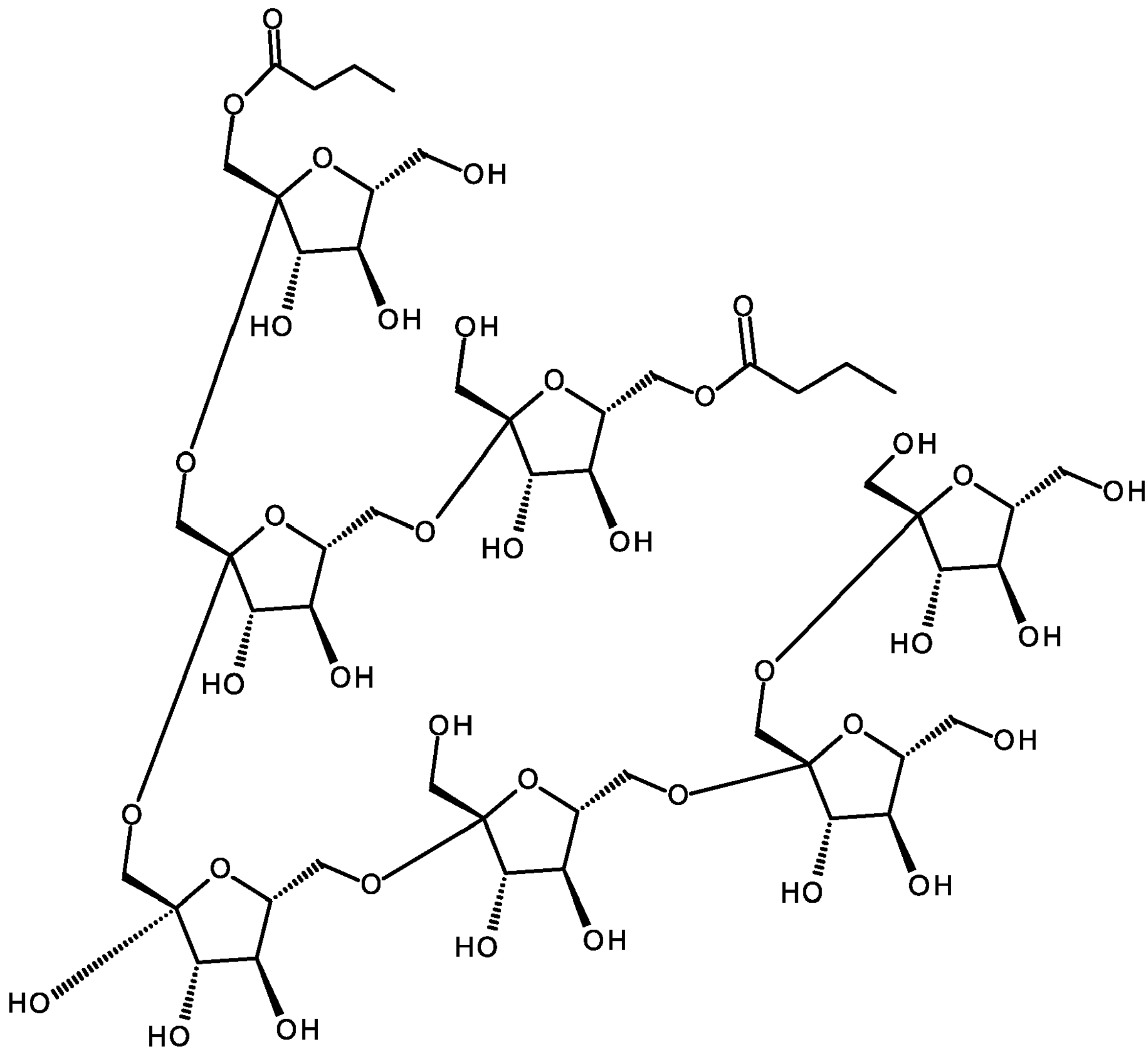

wherein

- $R^0$ is H;
- n is 3;
- $m^1$ is 2, $m^2$ is 1, $m^3$ is 1;
- the degree of polymerization is 7;
- the degree of substitution with butyric acid is 0.285 (=2/7);
- the degree of branching is 0.428 (=3/7).

Glucose (Alpha-D-Glucopyranose) is of formula:

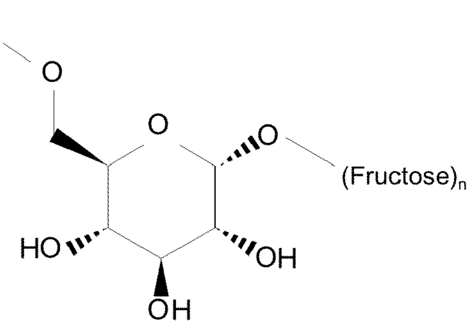

Galactose (Alpha-D-Galactopyranose) is of formula:

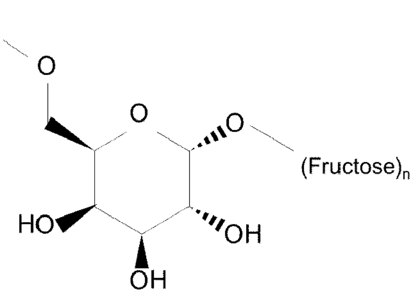

Maltose is of formula:

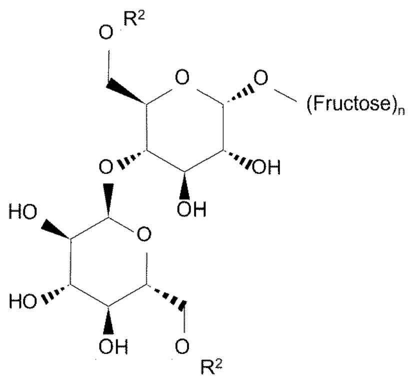

Lactose is of formula:

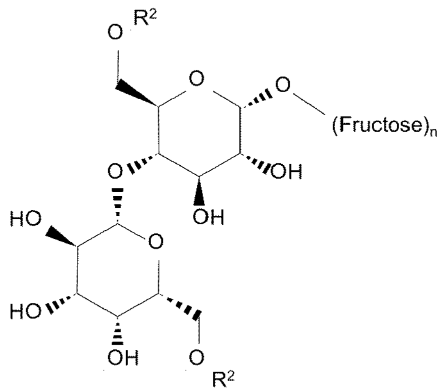

Xylose (Alpha D-Xylopyranose) is of formula:

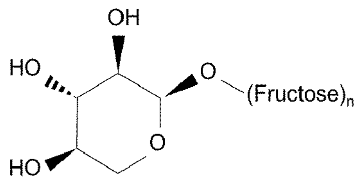

Arabinose (beta - L-Arabinopyranose) is of formula:

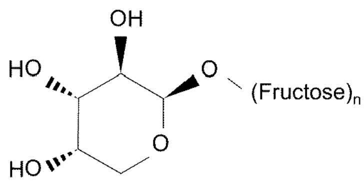

*Use of the compound*

A second aspect of the invention relates to the use of the compound according to the first aspect in preparation of a foodstuff or feed.

In certain embodiments, the compound disclosed herein is used in preparation of food for human subjects.

In certain embodiments, the feed is administered (foddered) to monogastric animals.

In certain embodiments, the compound disclosed herein is used in preparation of animal feed for health and nutrition. In particular embodiments, the compound is administered to farm animals. In other particular embodiments, the compound is administered to companion animals.

An alternative of the second aspect of the invention relates to the use of the compound according to the first aspect as a prebiotic. In certain embodiments, the prebiotic is used for the preparation of human food or food additive.

In particular embodiments, the compound is administered in liquid form. In other particular embodiments, the compound is administered in dry form, such as powder, granulates, tablets or in capsules.

*Production method*

A third aspect of the invention relates to a method for production of the compound according to the first aspect. The method comprises the steps:

a. providing levan in a suspension, wherein the levan is described by formula (Ia):

(Ia)

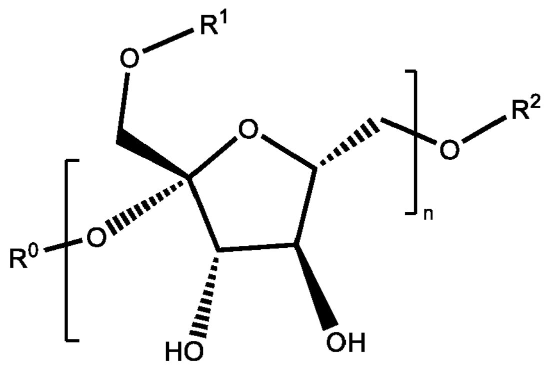

wherein

- $R^0$ is selected from H and a carbohydrate, wherein the carbohydrate comprises a primary OH group and wherein the carbohydrate is selected from the group of glucose, galactose, xylose, arabinose, maltose, lactose, and wherein the carbohydrate optionally may be modified with $R^2$ at the primary OH group;
- $R^2$ is H;
- n is an integer selected from 1 to 60;
- each $R^1$ is independently selected from the group of H and a moiety of formula (IIa);

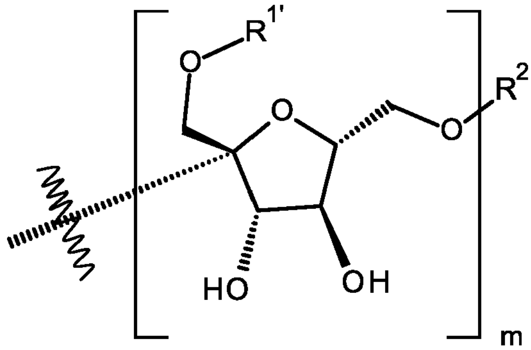

(IIa)

wherein
- $R^{1'}$ has the same definition as $R^1$;
- m is an integer selected from the group of 0 to 59;

b. adding to the suspension:

i. a carboxylic moiety selected from the group of a fatty acid, an unsubstituted benzoic acid, an OH-substituted benzoic acid, and a dicarboxylic acid;
ii. a triacylglycerol lipase enzyme (EC 3.1.1.3);

c. in a reaction step, permitting a reaction of the levan with the fatty acid in a reaction medium yielding a modified levan under conditions allowing activity of the lipase enzyme;
d. in an extraction step, optionally, extracting the modified levan.

In certain embodiments, the triacylglycerol lipase enzyme is derived from fungi. In certain embodiments, the triacylglycerol lipase enzyme is derived from a genus selected from the group of *Candida, Rhizopus, Rhizomucor, Thermomyces, Aspergillus.*

In certain embodiments, the triacylglycerol lipase enzyme is derived from bacteria In certain embodiments, the triacylglycerol lipase enzyme is derived from a genus selected from the group of *Burkholderia, Alcaligenes, Achromobacter* (UniProt-ID: A0A0M7CQN5). In certain embodiments, the triacylglycerol lipase enzyme is derived from the species

B. *cepacia* (UniProt-ID: A0A0N9HLH6).

In certain embodiments, the triacylglycerol lipase enzyme is selected from the group of UniProt-ID: P41365, UniProt-ID: P61872, UniProt-ID: P19515, Uni-Prot-ID: 059952, Uni-Prot-ID: Q0PW43, UniProt-ID: A0A0M7CQN5, UniProt-ID: A0A0N9HLH6.

*2M2B medium*

In certain embodiments, the reaction medium of the reaction step comprises ~8% (w/w) of levan.

In certain embodiments, the reaction medium of the reaction step comprises -10% (w/w) of the triacylglycerol lipase enzyme.

In certain embodiments, the reaction medium of the reaction step comprises -12% (w/w) of the carboxylic moiety.

In certain embodiments, the reaction medium of the reaction step has a water activity of <0.2. In certain embodiments, the reaction medium of the reaction step has a water activity of <0.1.

In certain embodiments, the reaction medium of the reaction step comprises a ternary alcohol. In certain embodiments, the reaction medium consists of >30% (w/w) of a ternary alcohol. In certain embodiments, the reaction medium consists of -43% (w/w) of a ternary alcohol. In certain embodiments, the reaction medium consists of -43% (w/w) of 2-methyl-2-butanol.

In certain embodiments, the reaction medium of the reaction step comprises 10-30% (w/w) of a polar organic solvent. In certain embodiments, the reaction medium of the reaction step comprises -15% (w/w) of a polar organic reaction solvent. In certain embodiments, the reaction medium comprises -15% (w/w) of DMSO.

In certain embodiments, -12% (w/w) of a molecular sieve is present in the reaction medium. In certain embodiments, the molecular sieve is zeolite.

In certain embodiments, the carboxylic moiety is in an activated form of a carboxylic acid. In certain embodiments, the carboxylic moiety is a vinyl ester of a carboxylic acid.

In certain embodiments, the reaction medium of the reaction step comprises

- -8% (w/w) of levan
- -10% (w/w) of the triacylglycerol lipase enzyme
- -12% (w/w) of the carboxylic moiety, particularly a vinyl ester of a carboxylic acid
- -43% (w/w) of 2-methyl-2-butanol
- -15% (w/w) of DMSO
- -12% (w/w) of a molecular sieve

and has a water activity of <0.2.

*DES medium*

In certain embodiments, the reaction medium of the reaction step comprises Deep Eutectic Solvents (DES).

In certain embodiments, the reaction medium comprises choline chloride and lauric acid. In certain embodiments, the reaction medium comprises -50% (w/w) choline chloride and -10% (w/w) lauric acid.

*Production of levan*

In certain embodiments, the levan is provided by a method comprising the following steps:

a. providing saccharose in a solution;

b. in a fructosyltransferase step, permitting a reaction of the saccharose catalyzed by a levansucrase enzyme (EC 2.4.1.10) in a solvent under conditions allowing activity of the levansucrase enzyme yielding levan;

c. in an extraction step, optionally, extracting the levan.

In certain embodiments, the levansucrase enzyme is derived from bacteria. In certain embodiments, the levansucrase enzyme is derived from a genus selected from the group of *Bacillus, Microbacterium, Erwinia, Zymomonas, Acetobacter, Rahnella, Pseudomonas*. In certain embodiments, the levansucrase enzyme is derived from a species selected from the group of B. *subtilis* (UniProt-ID: P05655, Gene-ID: 936413), *M. laevaniformans, E. amylovora* (Isc, UniProt-ID: Q46654), *Z. mobilis* (sacB, UniProt-ID: P0DJA3), *A. xylinum, R. aquatilis, P. fluorescens* (sacB, UniProt-ID: J2EX98), *B. polymyxa* (sacB, UniProt-ID: A0A0F0FYF1). In certain embodiments, the levansucrase enzyme is selected from the group of UniProt-ID: P05655, UniProt-ID: Q46654, UniProt-ID: P0DJA3, UniProt-ID: J2EX98, UniProt-ID: A0A0F0FYF1.

The specification further encompasses the following items:

*Items:*

1. A compound described by a formula (I)

(I)

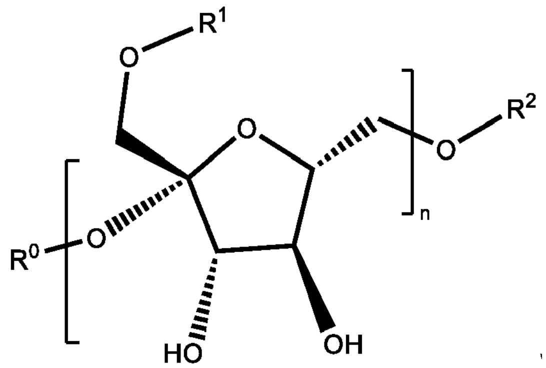

wherein

- $R^0$ is selected from H and a carbohydrate, wherein the carbohydrate is selected from
  - a carbohydrate comprising a primary OH group, the carbohydrate being selected from the group of glucose, galactose, maltose, lactose, and wherein the carbohydrate optionally may be modified with $R^2$ at the primary OH group; or
  - a carbohydrate comprising no primary OH group and being selected from the group of xylose, arabinose;
- $R^2$ is selected from the group of H, and an ester moiety;
- n is an integer selected from 1 to 60;
- each $R^1$ is independently selected from the group of H, a moiety of formula (II) and said ester moiety;

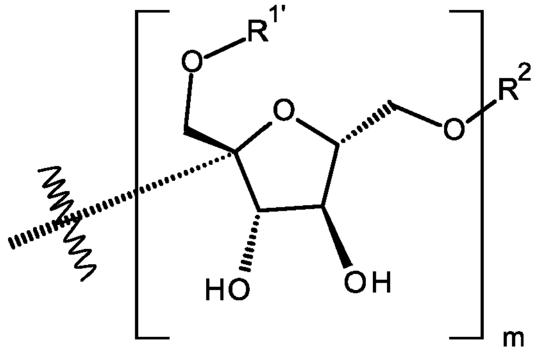

(II)

wherein
- $R^{1'}$ has the same definition as $R^1$;
- m is an integer selected from the group of 0 to 59;
- said ester moiety is an ester of a moiety selected from the group of a fatty acid, an unsubstituted benzoic acid, an OH-substituted benzoic acid, and a dicarboxylic acid;

wherein

- the degree of polymerization of said compound is 4 to 60;

- the degree of substitution of said compound is 0.2 to 1.0;
- the degree of branching of said compound is 0.0 to 0.8.

A. The compound according to item 1, wherein $R^0$ is H.
B. The compound according to item 1, wherein $R^0$ is glucose.
C. The compound according to item 1, wherein $R^0$ is galactose.
D. The compound according to item 1, wherein $R^0$ is maltose.
E. The compound according to item 1, wherein $R^0$ is lactose.
F. The compound according to item 1, wherein $R^0$ is xylose.
G. The compound according to item 1, wherein $R^0$ is arabinose.

2. The compound according to item 1, wherein said ester moiety is of formula (III)

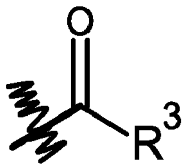

(III)

wherein

- $R^3$ is selected from the group of
  - $-(CH_2)_p-CH_3$ with p being an integer selected from the group of 0, 1, 2, 3, 4, 5, 6, 7, 8, 9, 10, 11, 12, 13, 14, 15, 16;
  - unsubstituted or OH-substituted phenyl, particularly unsubstituted or OH-monosubstituted phenyl;
  - $-CH_2-CH_2-COO^-$;
  - $-(CH_2)_q-(CH=CH-(CH_2))_r-(CH_2)_s-CH_3$ with q being an integer selected from the group of 3 to 9 and with r being an integer selected from the group of 1, 2, 3, 4, 5 and with s being an integer selected from the group of 0 to 7;

3. The compound according to any one of the preceding items, wherein $R^0$ is selected from the group of glucose, galactose, maltose, lactose, particularly $R^0$ is glucose.
4. The compound according to any one of the preceding items, wherein $R^3$ is selected from the group of phenyl, $-CH_2-CH_2-COO^-$, and $-(CH_2)_p-CH_3$ with p being an integer selected from the group of 0, 1, 2, 6, 10.
5. The compound according to any one of the preceding items, wherein $R^3$ is $-(CH_2)_2-CH_3$.
6. The compound according to any one of the preceding items, wherein $R^3$ is $-CH_2-CH_2-COO^-$.
7. The compound according to any one of the preceding items, wherein $R^3$ is $-CH_2-CH_3$.
8. The compound according to any one of the preceding items, wherein the degree of polymerization of said compound is 4 to 30, particularly wherein the degree of polymerization of said compound is 4 to 10, more particularly wherein the degree of polymerization of said compound is 8 to 15.
9. The compound according to any one of the preceding items, wherein the compound is

characterized by a ratio of β2-6 saccharide linkages to β2-1 saccharide linkages of 1:0.1 to 1:0.4;
particularly by a ratio of β2-6 saccharide linkages to β2-1 saccharide linkages of 1: 0.2 to 1:0.3.

10. The compound according to any one of the preceding items, wherein the degree of substitution of said compound with formula (III) is 0.2 to 0.6, particularly wherein the degree of substitution of said compound with formula (III) is 0.3 to 0.4.
11. The compound according to any one of the preceding items, wherein the degree of branching of said compound is 0.0 to 0.5, particularly wherein the degree of branching of said compound is 0.1 to 0.3.
12. Use of the compound according to any one of the preceding items in preparation of a feed.
13. The use of the compound according to item 12, wherein the feed is administered to monogastric animals.
14. Use of the compound according to any one of the preceding items 1 to 11 as a prebiotic.
15. A method for production of the compound according to any one of items 1 to 8, said method comprising the steps:

a. providing levan, wherein the levan is described by formula (Ia):
formula (Ia)

(Ia)

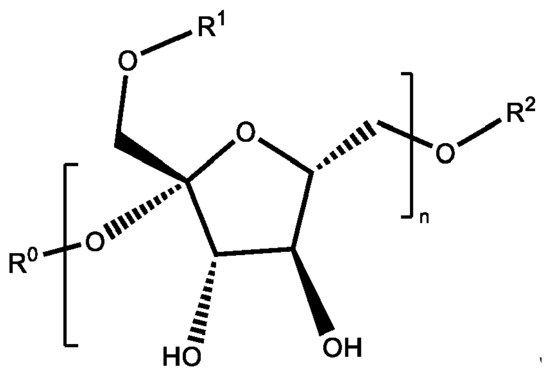

wherein

- $R^0$ is selected from H and a carbohydrate, wherein the carbohydrate comprises a primary OH group and wherein the carbohydrate is selected from the group of glucose, galactose, xylose, arabinose, maltose, lactose, and wherein the carbohydrate optionally may be modified with $R^2$ at the primary OH group;
- $R^2$ is H;
- n is an integer selected from 1 to 60;
- each $R^1$ is independently selected from the group of H and a moiety of formula (IIa);

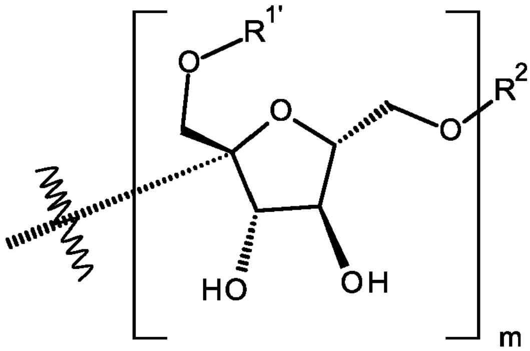

(IIa)

wherein
- $R^{1'}$ has the same definition as $R^1$;
- m is an integer selected from the group of 0 to 59;

b. adding:

i. a carboxylic moiety selected from the group of a fatty acid, an unsubstituted benzoic acid, an OH-substituted benzoic acid, and a dicarboxylic acid;
ii. a triacylglycerol lipase enzyme (EC 3.1.1.3);

c. in a reaction step, permitting a reaction of the levan with the fatty acid in a reaction medium yielding a modified levan;
d. in an extraction step, optionally, extracting the modified levan.

16. The method according to item 15, wherein the triacylglycerol lipase enzyme is derived from fungi, particularly from a genus selected from the group of *Candida, Rhizopus, Rhizomucor, Thermomyces, Aspergillus,* more particularly from a species selected from the group of C. *antarctica* (UniProt-ID: P41365), *R. oryzae* (UniProt-ID: P61872), *R. miehei* (UniProt-ID: P19515), *T. lanuginosus* (LIP, Uni-Prot-ID: O59952), *A. niger* (lipB, Uni-Prot-ID: Q0PW43).

17. The method according to item 15, wherein the triacylglycerol lipase enzyme is derived from bacteria, particularly from a genus selected from the group of *Burkholderia, Alcaligenes, Achromobacter* (UniProt-ID: A0A0M7CQN5), more particularly from the species *B. cepacian* (UniProt-ID: A0A0N9HLH6).

18. The method according to any one of items 15 to 17, wherein the reaction medium of the reaction step comprises ~8% (w/w) of levan.

19. The method according to any one of items 15 to 18, wherein the reaction medium of the reaction step comprises -10% (w/w) of the triacylglycerol lipase enzyme.

20. The method according to any one of items 15 to 19, wherein the reaction medium of the reaction step comprises -12% (w/w) of the carboxylic moiety.

21. The method according to any one of items 15 to 20, wherein the reaction medium of the reaction step has a water activity <0.2, particularly <0.1.

22. The method according to any one of items 15 to 21, wherein the reaction medium of the reaction step comprises a ternary alcohol, particularly the reaction medium consists of >30% (w/w) of a ternary alcohol, more particularly the reaction medium consists of -43% (w/w) of a ternary alcohol, most particularly the reaction medium consists of -43% (w/w) of 2-methyl-2-butanol.

23. The method according to any one of items 15 to 22, wherein the reaction medium of the reaction step comprises 10-30% (w/w) of a polar organic solvent, particularly wherein the reaction medium of the reaction step comprises -15% (w/w) of a polar organic reaction solvent, more particularly the reaction medium comprises -15% (w/w) of DMSO.

24. The method according to any one of items 15 to 23, wherein -12% (w/w) of a molecular sieve is present in the reaction medium, particularly wherein the molecular sieve is zeolite.

25. The method according to any one of items 15 to 24, wherein the carboxylic moiety is in an activated form of a carboxylic acid, particularly the carboxylic moiety is a vinyl ester of a carboxylic acid.

26. The method according to any one of items 15 to 25, wherein the reaction medium of the reaction step comprises a Deep Eutectic Solvent (DES).

27. The method according to any one of items 15 to 26, wherein the reaction medium comprises choline chloride and lauric acid, particularly wherein the reaction medium comprises -50% (w/w) choline chloride and -10% (w/w) lauric acid.

28. The method according to any one of items 15 to 27, wherein the levan is provided by a method comprising the following steps:

a. providing saccharose;
b. in a fructosyltransferase step, permitting a reaction of the saccharose catalyzed by a levansucrase enzyme (EC 2.4.1.10) yielding levan;
c. in an extraction step, optionally, extracting the levan.

29. The method according to item 27, wherein the levansucrase enzyme is derived from bacteria, particularly from a genus selected from the group of *Bacillus, Microbacterium, Erwinia, Zymomonas, Acetobacter, Rahnella, Pseudomonas,* more particularly from a species selected from the group of *B. subtilis* (UniProt-ID: P05655, Gene-ID: 936413), *M. laevaniformans, E. amylovora* (Isc, UniProt-ID: Q46654), Z. *mobilis* (sacB, UniProt-ID: P0DJA3), *A. xylinum, R. aquatilis, P. fluorescens* (sacB, UniProt-ID: J2EX98), B. *polymyxa* (sacB, UniProt-ID: A0A0F0FYF1).

Wherever alternatives for single separable features such as, for example, an enzyme or a carbohydrate backbone or a carboxylic moiety are laid out herein as "embodiments", it is to be understood that such alternatives may be combined freely to form discrete embodiments of the invention disclosed herein. Thus, any of the alternative embodiments for an enzyme may be combined with any of the alternative embodiments of a carbohydrate backbone and these combinations may be combined with any carboxylic moiety mentioned herein.

The invention is further illustrated by the following examples and figures, from which further embodiments and advantages can be drawn. These examples are meant to illustrate the invention but not to limit its scope.

*Description of the Figures*

Fig. 1 structural formulae for NMR peak attribution

Fig. 2 13C NMR spectrum of levan type FOS substituted with butyrate

Fig. 3 Reaction rate of levansucrase as a function of pH.

Fig. 4 Reaction rate of levansucrase as a function of temperature.

Examples:

*Materials and Methods: Culture of the strain, enzyme production*

*Strain activation*

The *Bacillus subtilis* DSMZ 10 strain was delivered by the German Collection of Microorganisms (DSMZ) as a freeze-dried culture in a vacuum double sealed vial. The freeze-dried pellet was swollen with 1 ml of sterile Bacillus medium:

Bacillus medium:

| | | | |
|---|---|---|---|
| Casein Peptone Tryptic Digest | : | 5 | g/l |
| Meat extract | : | 3 | g/l |
| Agar (optional) | : | 15 | g/l |

in distilled water

pH adjusted at 7.5 Sterilization 20 min at 121 °C

The resulting suspension was stirred with an inoculating loop and added to 5 ml of sterile Bacillus medium. Ten slanted agar tubes were each inoculated with 1-2 drops of the latter suspension. The Bacillus medium with 15 g/l agar was used for this. The tubes were incubated in an incubator at 30-32 °C for 5 days. It evolved small, beige, smooth colonies. Further, the tubes were stored in the refrigerator and used as stock culture for further cultivation. These slant tubes were prepared when needed or replicated after 2-3 months as follows: The isolated colonies were removed sterile from a slant agar tube with the aid of an inoculation loop and suspended in 5 ml Bacillus medium. This suspension was again dispensed into new slants. The tubes were then incubated and stored.

*Preculture in sucrose medium*

The preculture was carried out in a 200 ml culture in the presence of sucrose. To this purpose, 180 ml of the following nutrient solution:

| | | | |
|---|---|---|---|
| Sucrose | : | 40 | g |
| Casein peptones | : | 10 | g |
| Meat Extract | : | 1 | g |
| Yeast extract | : | 1 | g |
| $(NH_4)_2HPO_4$ | : | 20 | g |
| Water | : | 900 | ml |

and 20 ml of the following saline solution were prepared:

| | | | |
|---|---|---|---|
| $MgSO_4 \times 7H_20$ | : | 0,20 | g |
| KCl | : | 0,20 | g |
| $CaCl_2 \times 2H_20$ | : | 0,20 | g |
| $MnSO_4 \times H_2O$ | : | 0,01 | g |
| $FeSO_4 \times 7H_20$ | : | 0,01 | g |
| NaCl | : | 0,01 | g |
| Water | : | 100 | ml |

The nutrient and saline solutions were prepared separately. The pH of the nutrient solution was adjusted to 7.3 with phosphoric acid. The pH of the salt solution was adjusted to 2.0 with hydrochloric acid. The solutions were then sterilized at 121° C for 20 min. After cooling, the sterile salt solution was added to the nutrient solution. A volume of 5 ml of this solution was transferred to a stock culture slant. The bacteria were suspended by stirring with a sterile inoculating loop. With this suspension, the preculture was inoculated. It was incubated at 30°C, 250 $min^{-1}$ on a shaking machine.

After 15 hours of incubation, the culture medium was heavily populated by rods. The microorganisms were of different lengths but same diameters. In the culture small chains could be recognized. Some of the microorganisms were mobile. The medium turbidity (absorbance at 600 nm after dilution 1:15 with water) was 5,1. The pH was 6,3. This preculture served to inoculate the production medium.

*Formation of levansucrase in the fermenter*

To produce levansucrase from *Bacillus subtilis,* a nutrient solution (volume: 1,9 l with 3 g yeast extract; 30 g casein peptone; 3 g meat extract; 60 g $(NH_4)_2HPO_4$; 140 g sucrose; 5 g Tween 80; 3 ml M 30 silicone antifoam emulsion) and a saline solution (Volume 0,2 l with 600 mg $MgSO_4 \times 7H_2O$; 1000 mg KCl; 600 mg $CaCl_2 \times 2H_2O$; 30 mg $MnSO_4 \times H_2O$, 30 mg $FeSO_4 \times 7H_2O$; 30 mg NaCl) were prepared. The pH of the nutrient solution was adjusted to 7,3 with phosphoric acid. The nutrient solution was autoclaved at 121 °C for 20 min in a 5 Liter Fermenter. The salt solution was adjusted to pH 2 with hydrochloric acid and autoclaved at 121°C for 20 min. After cooling, the salt solution was added to the nutrient solution sterile.

The culture medium was warmed to 30°C and gently aerated and stirred. It was then inoculated with the preculture (0,2 l). The aeration rate was maintained at 90 l/h for 8 h, then it was increased to 180 l/h. The stirrer speed was at the beginning of the fermentation 600 $min^{-1}$ and then by an automatic control as required up to 1200 $min^{-1}$ so that the dissolved oxygen concentration did not fall below 20% of the air saturation. If required, antifoam agent (M30 silicone antifoam emulsion diluted with water 1:4) was added to the fermentation medium. During the first 12 hours of fermentation the pH dropped to 6,5. It was then kept at this value by adding a 12,5% ammonia solution.

After 15 h of fermentation time, a thermally sterilized sucrose solution (40% w/w) was gradually added to the fermentation medium. During this 15-hours fed-batch phase 600 ml of sucrose solution were consumed. After 30 h fermentation time, the fermentation was finished. The total fermentation volume was 2,9 l.

During the culture the turbidity of the medium was measured as absorbance at 600 nm from a water-diluted sample. The sample was diluted so that the measured extinction was between 0,1 and 1. The levansucrase activity was also determined during culture. For this purpose, 5 ml of fermentation solution were centrifuged at 4000 g for 10 min.

Two samples (20 µl and 50 µl) from the supernatant were mixed with 200 µl sucrose solution (Sucrose 100 g/l, phosphate buffer pH 6, 50 mM) and incubated at 30°C. Three 20 µl samples from this enzyme reaction solution were taken in 50 min intervals and diluted in 200 µl 0,1 M $Na_2CO_3$. In parallel, a series of glucose standard solutions (0-8 g/l) were analyzed. For glucose analysis, a 20 µl sample from each dilution was mixed with 200 µl Glucose Trinder Reagent (Sigma). These reaction solutions were incubated at 30°C for 10 min and their absorbance was measured at 490 nm. A levansucrase unit (U) was defined as the amount of enzyme that releases one pmol of glucose per minute. The determined values are shown in Table 1:

| Fermentation time, h | Turbidity | Activity in supernatant, U/ml |
|---|---|---|
| 0,0 | 1,0 | 0,0 |
| 7,7 | 2,5 | 0,1 |
| 10,5 | 5,3 | 0,5 |
| 13,5 | 11,1 | 1,0 |
| 25,5 | 45,0 | 1,7 |

The turbidity of the medium increased continuously during the culture. She quadrupled during the fed-batch phase. Levansucrase in the supernatant also rose continually. During the batch phase, 60% of the levansucrase was formed.

In the fed-batch fermentation of *Bacillus subtilis* DSMZ 10, 1,7 U/ml levansucrase was formed.

*Extraction of the levansucrase*

The fermentation broth (2600 g) was centrifuged at 2000 g for 30 min. This produced 200 g mushy sediment. The supernatant (2400 g) was passed through filter pads in two runs (Begerow CR 200, 10 cm diameter). For each run a pre-filtration layer with 0,5 g Becolite 5000, 1,5 g Becogur 3500 and 0,2 g Becogur 1500 was built up.

The procedure for enzyme determination from enzyme solutions was as follows. A set of 6 volumes (0-50 μl) of the enzyme solution to be determined (approx. 1 U/ml) were diluted to 50 μl with 50 mM pH 6 sodium phosphate buffer, mixed with 200 μl sucrose solution (125 g/l sucrose, 35 mM phosphate buffer pH 6) and incubated at 30°C for one hour. A second identical series was prepared 10 min before the end of the reaction. The reaction solutions were heated to 100°C for 5 min. A series of glucose solutions (0-10 g/l) were treated like the reaction solutions as follows: Aliquots (20 μl) were diluted with 200 μL water. From this dilution, 20 μl were pipetted and mixed with 200 μl glucose Trinder reagent (Sigma). These reaction solutions were incubated at 30°C for 10 min and their extinction was measured at 490nm.

One levansucrase unit (U) is the amount of enzyme which releases one μmol of glucose per minute under the conditions mentioned above.

800 g of polyethylene glycol (PEG) 1500 were dissolved in the filtrate (2400 g) at 10° C. This caused the precipitation of the polysaccharide levan formed during fermentation and associated to levansucrase. The resulting suspension was left overnight 10 °C and then decanted. The lower levansucrase-rich phase (250 ml) was diluted to 690 g with 50 mM sodium phosphate buffer (pH 6,0). Into this solution 230 g PEG 1500 were dissolved at 10°C. The enzyme-containing levan precipitated; the suspension was centrifuged at 10°C and 4200g for 30 min. The levansucrase-rich lower phase was diluted 1:2 with 50 mM sodium phosphate buffer (pH 6,0). This preparation (212 ml) contained 12,8 U/mL levansucrase.

The work-up balance is shown in Table 2:

| Step | Volume, ml | activity U/ml | Activity, U | Activity, % |
|---|---|---|---|---|
| Supernatant | 2400 | 1,7 | 4080 | 100 |
| Filtrate | 2400 | 1,2 | 2880 | 71 |
| concentrate | 212 | 12,8 | 2714 | 67 |

The levansucrase from *Bacillus subtilis* could be precipitated by polyethylene glycol with 67% yield to an enzyme concentrate. This concentrate was used for the production of samples and further experiments.

*Example 1 Enzymatic synthesis of the levan oligosaccharides*

The levansucrase preparation was used in the presence of D-galactose as an acceptor.

*Reaction start*

A reaction solution (1000 g) was prepared from the following components:

Reaction 1:

| | | | |
|---|---|---|---|
| Sucrose | : | 525 | g |
| D-galactose | : | 75 | g |
| 1 M phosphate buffer pH 6 | : | 20 | ml |
| Water | : | 303 | ml |

The medium was heated to 60 °C to dissolve the sugars. After cooling, the reaction was started by adding

| | | | |
|---|---|---|---|
| Levansucrase (13 U/ml) | : | 77 | ml. |

*Course of the reaction and analysis*

The reaction solution was incubated 72 h at 30°C in a 2 Liter Erlenmeyer flask on a shaker incubator (100 $min^{-1}$). During the reaction, the medium was analyzed using HPLC. For this purpose, approx. 50 mg of the reaction medium was diluted with water exactly 1:10 (w/w) and kept at 100°C for 5 min. The resulting solutions were diluted 1:2 with isopropanol

for precipitating the polysaccharide Levan and centrifuged at 3000 g for 10 min. One 200 μl sample of the supernatant was diluted with 800 μl 0,01 N $H_2SO_4$, filtered using a 0,45 μm membrane and injected into the HPLC chromatograph.

The sugars were eluted from the column (BIORAD HPX-87-H) with 0,01N $H_2SO_4$ at 26°C at 0,6 ml/min and detected by refractive index. The solid phase of the column is a Polystyrene-Divinylbenzene ion exchange resin with $-SO_3$ groups as active functions. In this chromatographic system (size exclusion), the compounds are eluted by sequentially declining molecular size: polysaccharides and oligosaccharides, trisaccharides, disaccharides, monosaccharides, polyols, and alcohols. The electrically charged substances (salts) are excluded from the resin therefore they elute like polysaccharides in the dead volume.

The reaction can be followed by obtaining chromatograms of the refractive index detection at the beginning of the reaction and after 72 h reaction. The production of levan oligosaccharides, the degradation of sucrose and accumulation of glucose and fructose are visible on the chromatograms.

Ten grams of immobilized glucose isomerase (EC. 5.3.1.5, Sweetzyme T, Novozymes) were added to the reaction medium. It was further incubated via the addition of glucose isomerase for 90 h at 50°C. Glucose was converted to fructose, as followed by HPLC. This enabled the further conversion of sucrose, which favored the downstream processing by exclusion chromatography. The concentrations of sugars in the reaction medium (1000 g) are stated in Table 3.

Table 3: Reaction mixture for the production of levan oligosaccharides

| | Compound concentration, g/kg | | | |
|---|---|---|---|---|
| Reaction time | 48 h | 72 h | 92 h | 162 h |
| Levan Oligosaccharides | 103 | 123 | 149 | 148 |
| Disaccharides | 213 | 140 | 95 | 45 |
| Glucose | 182 | 218 | 244 | 191 |
| Fructose + Galactose | 119 | 134 | 156 | 252 |
| Total | 617 | 615 | 644 | 636 |

*Reaction termination*

The reaction was then terminated by heating the medium. The reaction vessel was kept in boiling water bath for 40 min. The temperature of the solution rose to 90°C after 20 min heating and 97°C after 40 min. The reaction solution was mixed with 500 ml water and filtered at approx. 40°C through filtration screens (Begerow CR 200). The medium was kept cool for further treatment by size exclusion chromatography.

*Example 2: Purification of levan oligosaccharides*

*Size exclusion chromatography*

The remaining mono- and disaccharides were removed from the reaction mixture using chromatography. For this purpose, a chromatography column (diameter: 5 cm) was filled with 1,8 l ion exchange resin. The resin Amberlite CR 1320 Ca (Rohm and Haas) was applied. It was a polystyrene-divinylbenzene copolymer with strongly acidic sulfonic acid groups as cation scavengers. The resin was supplied with $Ca^{++}$ as the counter ion. The chromatography was performed at room temperature with deionized water as eluent. The sugar solution (1550 g) was treated in 7 chromatographic rounds. A volume of 220 ml sugar solution was preheated to 40°C and pumped into the column at 360 m/h. It was then eluted at room temperature and 640 ml/h with deionized water. Fractions of 50 ml volume were collected and analyzed by HPLC (column: Biorad HPX-87-H).

There were no sugars in the dead volume of the column (650 ml). The other fractions (200 ml) contained mainly levan oligosaccharides and were retained as product fractions The other fractions (150 ml) contained levan oligosaccharides but also di- and monosaccharides and were retained for repurification. The remaining elution volume (1000 mL) contained no levan oligosaccharides and was discarded. The column was then ready for the next chromatography run. Table 4 shows the overall balance of the 7 chromatography runs:

Table 4: Size exclusion chromatography of levan oligosaccharides (first step)

| | Product-fraction | Recycling-fraction | Monosaccharide fraction | Total |
|---|---|---|---|---|
| volume, ml | 1430 | 1060 | 7000 | 9490 |

(continued)

| | Product-fraction | Recycling-fraction | Monosaccharide fraction | Total |
|---|---|---|---|---|
| Sugar | quantity, g | quantity, g | quantity, g | quantity, g |
| Levan Oligosaccharides | 93 | 48 | 7 | 148 |
| Disaccharides | 4 | 13 | 28 | 45 |
| Monosaccharides | 1 | 22 | 420 | 443 |
| Total | 98 | 83 | 455 | 636 |
| Purity, % | 95 | 58 | 2 | 23 |
| Yield, % | 63 | 32 | 5 | 100 |
| After one chromatography step, the levan oligosaccharides were obtained with a purity of 95% **(Yield: 75%)**. | | | | |

The solution to be repurified was concentrated to 260 g under reduced pressure at 45-55°C and chromatographed again. There were no sugars in the first fractions (600 ml). Four more fractions (200 ml) were combined to give the product. Four other fractions (200 ml) contained levan oligosaccharides and was recycled for eventual further processing. The remaining elution volume (1000 ml) was discarded. Table 5 shows the balance of this second chromatography step:

Table 5: Exclusion chromatography of levan oligosaccharides (second step)

| | Product-fraction | Recycling-fraction | Monosaccharjd-fraction | Total |
|---|---|---|---|---|
| Volume, ml | 200 | 200 | 1000 | 1400 |
| Sugar | quantity, g | quantity, g | quantity, g | quantity, g |
| Levan Oligosaccharides | 18,0 | 22,9 | 7,0 | 47,9 |
| Disaccharides | 0,4 | 4,4 | 8,4 | 13,2 |
| Monosaccharides | 0,1 | 3,5 | 18,6 | 22,2 |
| Total | 18,5 | 30,8 | 34,0 | 83,3 |
| Purity, % | 97 | 74 | 21 | 58 |
| Yield, % | 38 | 48 | 15 | 100 |

*Desalting*

The product solution (1630 ml) was concentrated under reduced pressure at 50°C to 325 g. The conductivity of the concentrated solution was 403 μS/cm and its pH was 5,2. it was deionized using ion exchangers. To do this, 50 ml weakly basic (Amberlite IRA 92, Rohm and Haas) and 35 ml strongly acidic (Amberlite 252 H, Rohm and Haas) ion exchange resins were added gradually while stirring the solution gently. The conductivity of solution dropped to 40 μS/cm; its pH was 3,1. The solution was kept 20 min in the presence of ion exchangers while further stirred. The slightly yellow color of the solution disappeared during deionization. The solution became slightly cloudy. Latter should be attributed to the low pH and ionic strength which cause precipitation of macromolecules. The ion exchangers were separated from the solution by filtration and washed with deionized water. A mass of 435 g of product solution was obtained. Its pH was adjusted to 5.2 by adding 60 μl of 1,5 N NaOH.

*Ultrafiltration and freeze drying*

The product solution was microfiltered through a 0,45 μm cellulose acetate membrane filter (Sartorius). The micro filtrate was ultra-filtered through a polysulfone membrane (cut-off 10 kD, Membrane area: 0,1 $m^2$, Easyflow module, Sartorius) at room temperature. The clear ultrafiltrate was collected in a sterile vessel with sterile air balance. When the product solution was completely ultrafiltered, the apparatus was flushed with 100 ml water. The ultrafiltration lasted a total of 2,25 hours. The ultrafiltrate (approx. 500 ml) was then freeze dried.

*Example 3: Reference synthesis in organic bisolvent (DMSO/2M2B) medium*

Synthesis of sucrose esters in organic solvent was performed at 10 mL scale. Reaction media for 6 syntheses were prepared as follows: in a scaled 50 mL centrifuge tube, 8.05 g of sucrose were solved in 14 mL DMSO under stirring at 50 °C for 2 h. Parallel to this, 8 mL of 2M2B (2-methylbutan-2-ol) and 2 g of 3 Å molecular sieve were transferred to each of the six 20 mL reaction vessels. The vessels were heated to the reaction temperature of 40 °C and DMSO-sucrose solution was then pipetted to each vessel. The volume increase from the added sucrose (+20 %) was taken into account, so that each vessel received 2.4 mL of the solution. Pipetting was done slowly and under constant stirring (90 rpm) to reduce sticking of the molecular sieve. After overnight stirring, 1 g of immobilized C. antarctica lipase B (Novozyme 435) was added to the 3 synthesis vessels, further 3 vessels being kept as control. For the time of addition, the stirring rpm was increased to 120 rpm to aid submerging of the enzyme beads in the suspension. The reaction was started by addition of the acyl donors. 1.27 mL vinyl butyrate, 1.935 mL vinyl caprylate or 2.6 mL vinyl laurate were added. Each acyl donor was added to 2 separate vessels, one containing the lipase, and one control without the enzyme. The reaction was run for 120 h in total, during this time, several samples were taken and TLC analytics thereof was performed.

*Example 4: Enzymatic synthesis in deep eutectic solvent*

*Synthesis at 5 mL scale*

Deep eutectic solvents DES consist of a hydrogen bond donor (HBD, Hydrogen Bond Donor) and a hydrogen bond acceptor (HBA, Hydrogen Bond Acceptor). (Makoś et al., Microchemical Journal, Volume 152, 2020, 104384 )

Enzymatic syntheses in the DES media were conducted in a choline chloride:Raftilose 95:water DES at a respective molar ratio of 1:0.5:2.5. For Raftilose P95, the ratio is referring to the monosaccharide equivalents, as it is a mixture of oligosaccharides with DP 2-8. Initial syntheses were conducted at an approximate 5 mL scale. Choline chloride (2.8 g) and Raftilose P95 (1.62 g) were weighed in using a precision scale and transferred to the 20 mL reaction vessels. A volume of 0.9 mL HPLC-grade water was pipetted into the reaction vessel. The mixture was then placed in the heating block and heated under stirring (90 rpm) to initially 50 °C. With later syntheses, DES formation was induced at 65 °C, as additional tests showed improvements in media formation at higher temperature (data not shown). After formation of the DES, indicated by formation of a clear viscous liquid, the stirring speed was decreased to 60 rpm and the respective acyl donor was added. The reaction was started by adding 200 mg of the Novozyme 435 immobilized lipase after complete suspension of the acyl donor. The reactions were run for 16-72 hours, samples were taken over the course of each reaction (Table 4).

Summary:

- A deep eutectic solvent (DES) FOS system is composed of choline chloride:Raftilose P95:water (1:0.5:2.5, molar ratio);
- a viscous DES is formed after heating (65 °C);
- acyl donor (lauric acid (LA), powdered) is added and dispersed
- molten flaked LA is observed;
- dispersed flaked benzoic acid (BA) is added;
- synthesis start: addition of lipase Novozym 435 (acyl donor: powdered LA);
- a highly viscous, yellow DES synthesis medium is observed after 96 h (50 °C, 60 rpm).

*Synthesis at 100 mL scale*

After the initial small-scale experiments, synthesis in DES media was scaled up to an approximate 100 mL scale. 56 g of choline chloride and 32.4 g of Raftilose P95 were weighed in using a precision scale and transferred into a tall 250 mL beaker. The beaker including the used magnetic stirrer bar were weighed beforehand. A volume of 18 mL of HPLC-grade water was pipetted into the beaker with a glass pipette. The beaker was then placed onto the heater and clamped to an extension bar, secured at the back of the heater unit. A thin film of paraffin was applied between the heater surface and the beaker, to improve heat transfer. DES formation was induced by gradually heating to 65 °C. For initial mixing of the compounds, stirring was set to 200 rpm. After completion of mixing, rpm were set to 970 for the whole DES forming process. The temperature sensor for heater regulation was placed directly in the top half of the DES. Upon formation of the DES, the mixture was allowed to cool down to 50 °C and 8.012 g (0.04 mol) of finely ground lauric acid as acyl donor was subsequently added. After evenly distribution of lauric acid, the reaction was started by addition of 4 g of immobilized lipase

(Novozyme 435). The stirrer speed was set down to 500 rpm after complete dispersion of the enzyme beads within the medium. The top of the beaker was then partly covered with aluminum foil, decreasing the total open area by about 2/3 and redirecting the opening to the side. This was done to protect the open vessel reaction and to slow down water evaporation.

After 15-18 h, stirring was increased shortly to 800 rpm, to mix in a top layer which had initially formed within this time. The reactions were performed for 52 and 168 h. Samples were taken in between and at the end of every reaction. Before the first sample was taken, the beaker was cleaned from paraffin and weighed.

Summary:

- A deep eutectic solvent (DES) system is composed of choline chloride:Raftilose P95:water (1 :0.5:2.5, molar ratio);
- a viscous DES is formed after heating (65 °C);
- acyl donor (lauric acid (LA), powdered) is added and dispersed;
- synthesis start: addition of lipase Novozyme 435;
- a highly viscous, yellow brownish DES medium is formed after 168 h (50 °C, 500 rpm).

*Sampling*

For sampling, the reaction medium was thoroughly mixed with a glass rod. A sample of the mixed viscous medium was scooped out with a spatula and transferred into a 15 mL falcon tube. The sample was weighed in for further processing. For the small-scale syntheses, sample size was about 0.5 g, for the scaled-up reactions sample size was up to about 1 g. The samples were processed by liquid-liquid extraction, the organic phase of the extraction was subsequently analyzed by TLC. For the syntheses in the DMSO/2M2B solvent, sampling for TLC analysis was done by taking up a small quantity of medium directly with a capillary glass tube for subsequent direct plating on a TLC plate.

*Extraction*

Separation of product from DES components was performed using a slightly modified extraction method adapted from Pöhnlein et al. (2015). The sample to be extracted was weighed in on a precision scale. A volume of 0.545 mL HPLC-grade water was added per 1 g of sample. Temperature of the water was kept cool at 10-15 °C, to lower potential hydrolytic activity of the lipase enzyme present in the medium. The DES was vigorously shaken together with the water for 45 s. If larger clods remained, they were manually dispersed with a glass rod, followed by further shaking. Ethyl acetate was added to the suspension (0.954 g per 1 g sample) and shaken vigorously for 45 s. The suspension was left to separate. After phase separation, the top organic phase was transferred into a separate sealed tube. To avoid uptake of the enzyme beads located at the interface to the aqueous phase, a small amount of organic phase was left to remain. Initial extraction with ethyl acetate revealed leftover product, which could be recovered by adding a second volume of ethyl acetate, added after removal of the first organic phase. Therefore, the extraction process was investigated more closely by TLC analysis of three subsequent extracts from three syntheses each. As a result, a second extraction step was conducted for every synthesis. For this, after removal of the initial ethyl acetate phase, an equal amount of ethyl acetate was added again, followed by 45 s of vigorous shaking. After complete phase separation, the top organic phase was likewise transferred into a separate tube.

*Example 4A: Enzymatic functionalization by C Antarctica Lipase*

During enzymatic functionalization, esterification or transesterification was catalyzed by an enzyme in a low-water medium. The immobilized lipase from *Candida antarctica* (Novozym 435) proved to be suitable. The reaction was catalyzed by transferring acyl groups from an acyl donor to an acyl acceptor. The acid itself or an ester of it, e.g. vinyl ester, was used as the acyl donor. FOS served as the acceptor in the project. The development of the methods was carried out with commercial inulin FOS, as the FOS of the Levan type were completely used for the chemical production of the batches for animal feed. Water could also serve as an acyl acceptor. Therefore, the reaction was carried out in a low-water medium so that the transfer occurred predominantly to the FOS. In addition, the reaction with vinyl esters as donors produced volatile acetaldehyde, which escaped from the medium.

In one version, a mixed solvent consisting of 2-methyl-2-butanol and DMSO was used as the medium. The medium had to be low in water and dissolve both the predominantly water-soluble FOS and the predominantly organic-soluble substituents.

In another version, the reactants were dissolved in a "deep eutectic solvent" system, specifically, choline chloride and FOS. In addition to the sugars, lauric acid and benzoic acid dissolved well in this medium. The esterification of the FOS

in these media was detected using thin-layer chromatography.

The following tables show examples of the compositions of reaction media for both media variants.

Table: Synthesis medium from mixed solvent

| Component | Quantity | Unit | Mass fraction (f/w) |
|---|---|---|---|
| 2M2B: | 40 | ml | 43% |
| DMSO: | 10 | ml | 15% |
| Mole sieve: | 10 | g | 13% |
| Enzyme: | 7,5 | g | 10% |
| Profeed: | 6 | g | 8% |
| Vinyl butyrate: | 10 | ml | 12% |
| Total: | | | 100% |

Table Synthesis medium from deep eutectic solvent

| Component | Quantity | Unit | Mass fraction (f/w) |
|---|---|---|---|
| Raftilose P95 | 0,20 | mol | 27% |
| Choline chloride | 0,40 | mol | 47% |
| $H_2$ O dist. | 1,00 | mol | 15% |
| Lauric acid (dodecanoic acid) | 0,04 | mol | 7% |
| Enzyme | | | 3% |
| Total: | | | 100% |

The syntheses in 2M2B and DES were successfully scaled up to medium quantities of 76 g and 118 g, respectively.

*13C NMR analysis of levan butyrate*

To determine the degree of substitution, the ratio of the number of butyrate groups to the number of sugar units (fructose and glucose) was determined by analysis of the H NMR spectrum (Fig. 2). The number of butyrate groups can be calculated from the peak area of the carbons of the -$CH_2$-group in position b [A(b)]. For attribution of positions, see Fig. 1. The peaks 5, 5" and 1' correspond to the carbons of fructose in position 5 [A(5+5")] and of glucose in position 1'[A(1')]. Their sum indicates the number of sugar units. The degree of substitution can be calculated according to equation (1) and corresponds to 1 (one butyrate group per sugar unit).

$$DS = A(b)/A(5+5''+1') \quad (1)$$

| δ [ppm] | Peak area | Atribution |
|---|---|---|
| 186,63 | | Ca‘, Na-butyrate |
| 180,87-175,64 | 0,12 | Ca, butyrate |
| 108,01-103,37 | 1,54 | C2 Fructose Inulin+Levan Typ β-2→1 und β-2→6 |
| 95,56-93,88 | 0,14 | C1' Glucose |
| 84,99-83,43 | 0,16 | C5 Fructose Inulin Typ β-2→1 |
| 83,43-81,09 | 1 | C5" Fructose Levan Typ β-2→6 |
| 81,09-75,44 | 2,92 | C3,4, C3",4" Inulin+Levan Typ β-2→1 und β-2→6 |
| 75,55-68,85 | 0,68 | C2',3',4',5' Glucose |
| 66,86-61,68 | 3,20 | C1,6, C1",6" Inulin+Levan Typ β-2→1 und P-2→6, C6' Glucose |

(continued)

| δ [ppm] | Peak area | Atribution |
|---|---|---|
| 56,90 | | Ch DSS |
| 42,7 | | Cb', Na-butyrate |
| 38,20 | 1,28 | Cb, butyrate |
| 21,87 | | Cc', Na-butyrate |
| 21,62 | | Cg DSS |
| 20,53 | 1,36 | Cc, butyrate |
| 17,58 | | Cf DSS |
| 15,82 | | Cd', Na-butyrate |
| 15,44 | 1,20 | Cd, butyrate |
| 0,00 | | Ce DSS |

All NMR measurements were performed on a Jeol JNM-ECZL 500 MHz NMR Spectrometer with Royal HFX-Probe (Automatic Tuning und Matching); Frequency 1H: 499.7189 MHz; Frequency 13C: 125.6544 MHz; Frequency 31P: 202.2897 MHz; Frequency 19F: 470.2055 MHz; Software: Jeol Delta 6.1

*Properties of fFOS: Metabolisation in the digestive tract by the enzymatic assembly of monogastrics*

The compounds analysed are esters between primary or secondary alcohols and fatty acids. In the stomach, the influence of the pH value and its chemical effect is decisive. The stability of the molecules there depends mainly on the nature of the bond. This is the same for all the molecules analysed. It was to be expected that the compounds synthesised as part of the project would be as stable under the conditions prevailing in the stomach as the model substances that had proved to be stable in preliminary investigations. In contrast, hydrolysis in the small intestine is enzymatically catalysed and the stability can vary greatly between the molecules studied. The work on stability was therefore focussed on pancreatic hydrolysis.

The synthesised ester compounds consisted of a fructooligosaccharide scaffold of the inulin or levan type, to which substituent molecules were bound via an ester bond. Organic acids, predominantly butyric acid, and also propionic acid, acetic acid, succinic acid and benzoic acid served as substituents. The study consisted of incubating the substances in a simulated intestinal environment, followed by the detection of the substituent acid present and, if applicable, released by means of HPLC. Tributyrin was used as a positive control according to the literature.

All compounds analysed proved to be stable under the test conditions of the simulated small intestine. They were not broken down by the pancreatic enzymes. Tributyrin was largely hydrolysed (positive control).

This finding was important as it confirmed the project concept. The synthesised compounds were not or only slowly broken down by the animal enzymes. As such, the substances developed in the project were able to interact with the microflora of the host in the feeding studies. This is a prerequisite for the effect of the compounds as prebiotics.

This statement applied equally to all compounds tested (except for the positive control tributyrin). The compounds tested could all be used as potential candidates for different effects in the digestive tract.

*Properties* of *fFOS: Metabolisation in the digestive tract by the microbiome in monogastrics*

The metabolisation of the test substances in the microbiological screening model was investigated. A selected, commercial, probiotic mixed culture was used (food supplement with strains of Lactobacillus, Lactococcus and Bifidobacterium). This was used to differentiate the synthesised sample compounds as a carbo source.

The microorganisms were activated in an anaerobic preculture and formulated in physiological serum as a cell suspension. This culture was used in a suitable controlled dilution to inoculate the wells of a microtitre plate. There, the microorganisms grew in the presence of MRS basic medium (basic culture medium for lactic acid bacteria) and the test substances as the predominant carbon (C) source. The microbial growth at 39°C was monitored by measuring the turbidity over 19 h in the incubator spectrophotometer. The microtitre plate was covered with a gas-tight adhesive film to protect against oxygen ingress. A set of growth curves is shown in Figure 12 (Probiotic culture with test substances as C-source) as an example. The turbidity values were determined after 16 h of incubation for all synthesised preparations and controls. Their values represent the growth of the microorganisms on the respective C source in the test.

The tested compounds were well metabolised by probiotic cultures, tending to be better metabolised than the

non-substituted fructooligosaccharides.

*Advantageous properties of the fFOS*

Changes in the properties of functionalised fructooligosaccharides were observed in comparison to non-substituted FOS.

TLC analyses were used to evaluate the hydrophobic behaviour of the esters synthesised from fructooligosaccharides and butyric acid. In this technique, the substances migrated in a hydrophilic silica gel layer. They were eluted through a polar, anhydrous, organic solvent (chloroform/methanol/acetic acid). The starting materials fructooligosaccharides did not migrate in this system; they had a very strong affinity for the hydrophilic, solid phase. Hydrophobic compounds, such as fatty acids, were not retained by this phase. They eluted in the solvent front.

Commercial sucrose esters (palmitic acid mono- and di-esters) were analysed using this technique as a comparison.

Sucrose esters are used as emulsifiers in foods. With an HLB (hydrophobic/lipophilic balance) of around 15, they are water-soluble substances that also have an affinity for organic phases (oil and fat).

It was found that functionalized fructooligosaccharides eluted intermediately like the sucrose esters. Esterification with butyric acid gave the fructooligosaccharides a lower affinity for the solid phase and a higher affinity for the organic running phase. Like the sucrose esters, the synthesised products had a double affinity for aqueous and oily phases (Figure 14: Physico-chemical properties of fFOS ).

This property gives the synthesised molecules a new quality compared to the starting materials. This property can prove to be advantageous for metabolisation by microorganisms, as the hydrophobic properties have a very strong influence on the behaviour towards membranes. This is a further confirmation of the project approach.

The compounds prepared according to the invention have the properties of prebiotics:

1. Due to the β(2-1) and β(2-6) bonds in the oligosaccharide chain, they cannot be hydrolysed by the host's enzymes and can serve as a substrate for the host's microbiome

2. The application as a feed additive showed positive effects of the compounds on animal breeding (see below; "Effect of fFOS in animals"). It can be deduced from this that the compounds brought health benefits to the test animals. In addition, they can have further functionalities due to substitution by functional groups:

3. Depending on the substituents, the fFOS can act in several ways, not only as a substrate but also, for example, as a selective inhibitor

4. Depending on the substituents, fFOS can have a direct effect on intestinal wall metabolism.

The molecules according to the invention therefore ultimately fulfil the definition of prebiotics and include additional functions. They represent a new class of compounds with improved prebiotic properties.

*Effect of fFOS in animals*

The fFOS of the Levan type were used in a trial as feed additives for chicken breeding.

The aim of the study was to evaluate the efficacy of the new functionalized fructooligosaccharides (fFOS: butyric acid esters of levan oligosaccharides with a "degree of substitution" around 0.43) supplemented in graded doses (2, 4 and 8 g/kg feed) to the basal diet for broiler chickens aged d 0 to d 14. Efficacy was demonstrated in terms of performance and health status throughout the 14-day trial period. In addition, the apparent ileal digestibility of selected nutrients was measured at the end of the study. As a control, the broilers were fed the basal diet without the inclusion of fFOS. All procedures were carried out according to the technical guidelines of the Panel on Additives and Products or Substances used in Animal Feed (EFSA 2011). The trial consisted of three hundred and eighty healthy male broilers (Cobb 500) divided into 4 treatment groups in 40 pens (10 or 8 birds per pen; 10 pens per treatment).

The trial was conducted without any adverse technical events (e.g. power failure, food/water outages, etc.). The overall mortality and culling rate was 3.95%. No clinical signs were observed in the remaining broilers and no therapeutic or preventive treatments were applied. The dry matter content of the litter averaged approximately 79% at the end of the study and did not differ between the treatment groups. The analysed nutrients in the experimental diets were consistent with the calculated levels.

The observations showed that the treatment of the tested product had no negative effects on the health of the animals.

In terms of growth performance, the results showed that the use of fFOS slightly increased total body weight gain

on average compared to the control group (+1.7%). The greatest effect was seen at 4.0 g/kg feed (+2.9 %).

The calculated total feed to gain ratio of broilers fed basal diet without fFOS supplementation (T1 = control group) was 1.470. The results of fFOS (T2-T4) were all numerically lower compared to the control group (on average -2.2%). With regard to the graded doses, the highest effect was found at 4 g/kg feed.

In addition, it was found that fFOS at 4 g/kg feed significantly reduced the feed to gain ratio compared to the control group (-4.0%).

The average dry matter content in the ileum digesta was 60.9 %. Comparisons between the control group and fFOS showed a dose-dependent reduction in dry matter content, whereby the differences were significant at 8 g/kg feed (-9.8 %).

The observed positive effect of fFOS at 4 g/kg feed was reflected in numerically improved mean values of apparent ileal digestibility compared to the control group (organic matter, crude protein, crude fat, crude ash, calcium, phosphorus).

When using 2 g/kg feed, slightly reduced values of apparent ileal digestibility were found compared to the control group.

With the exception of phosphorus, the results obtained with fFOS at 8 g/kg feed were also at a lower level than in the control group. The apparent ileal digestibility of phosphorus was higher in the group with fFOS at 8 g/kg feed than in all groups. The increase was significant compared to the 2 g/kg feed dose.

In summary, the present results indicate that the addition of fFOS at 4 g/kg feed significantly reduced the total feed-to-gain ratio compared to the control group. The observed benefits were reflected in numerically improved mean values of apparent ileal digestibility. Accordingly, it can be concluded that the dose level of 4g/kg feed proved to be optimal in the first two weeks of life.

The dose response was recognisable with regard to the dry matter in the ileal digesta, but not for the other parameters.

## *General Methods*

### *Levansucrase activity*

The procedure for levansucrase determination from enzyme solutions was as follows. A set of 6 volumes (0-50 μl) of the enzyme solution to be determined (approx. 1 U/ml) were diluted to 50 μl with 50 mM pH 6 sodium phosphate buffer, mixed with 200 μl sucrose solution (125 g/l sucrose, 35 mM phosphate buffer pH 6) and incubated at 30°C for one hour. A second identical series was prepared 10 min before the end of the reaction. The reaction solutions were heated to 100°C for 5 min. A series of glucose solutions (0-10 g/l) were treated like the reaction solutions as follows: Aliquots (20 μl) were diluted with 200 μL water. From this dilution, 20 μl were pipetted and mixed with 200 μl glucose Trinder reagent (Sigma). These reaction solutions were incubated at 30°C for 10 min and their extinction was measured at 490nm.

One levansucrase unit (U) is the amount of enzyme which releases one μmol of glucose per minute under the conditions mentioned above.

### *Thin layer chromatography (TLC)*

TLC analysis was conducted on precut stripes of HPTLC silica layered aluminum plates. The plates were slit with a razorblade prior to cutting, to decrease mechanical stress and tear on the silica layer. On each stripe, a starting line was marked in approximately 20 mm height with a graphite pencil. Samples were taken up with 6.66 μL capillary glass tubes and applied onto the plate stripes at the predrawn starting line, each spot roughly corresponding to 1 μL of sample. To avoid spreading of spots, for higher concentrations, spots were left to dry for 5-10 s before another volume of about 1 μL was added on top. After a short drying period (~ 1 min), the stripes were placed into the chamber containing a mobile phase of chloroform:methanol:acetic acid (63:17:2). Composition of the mobile phase was adapted from Pöhnlein et al. (2015) and modified accordingly: with slight decrease of the chloroform:methanol ratio from 65:15 to 63:17, migration of more hydrophilic compounds was improved. This was done to increase separation of monoesters from saccharides of different polymerization degrees.

Immediately after the run, the solvent front was marked on the stripe with a graphite pencil ine. Rf values were calculated by dividing distances from the starting line for each spot by the distance of the solvent front. The stripes were left to dry for at least 30 min. After evaporation of the mobile phase components, indicator dyes were applied. Two dyes were utilized: a p-anisaldehyde solution as indicator for hydroxyl and ester functionalities. A bromocresol green solution was utilized for detection of organic acids. The p-anisaldehyde solution was applied by quickly immersing the stripe into the solution and letting excess dye drip of before drying. Bromocresol green was applied by spraying a thin, even film onto the stripe, which was let dry subsequently. After a drying period of about 15 min, the stripes were subjected to 3-5 min of heat. This was done by using a heat gun from a distance of about 0.2 m.

Organic and aqueous phases of the DES as a whole as well as individual DES components were analyzed via TLC. This was done to identify distribution of said components between the phases as well as their migration and appearance under the chosen TLC conditions. Further, this allowed for later identification of products formed during reaction. All tests samples were analyzed using p-anisaldehyde as well as bromocresol green dye respectively. For comparison, the migration of two commonly used sucrose palmitate ester products, MSC Ryoto P170 and P1670 was tested as well. This was done with both the modified 63:17:2, as well as the 65:15:2 mobile phase, to assess migration of different ester classes, especially those with low degrees of esterification, which were expected to account for a larger fraction of the products.

*Exclusion HPLC*

For the HPLC analysis, about 50 mg of a reaction medium are kept at 100° C for 5 min and diluted exactly 1:20 (w/w) with water. From the resulting solutions, 400 µl were diluted with 1600 µL 0.01N H2SO4, filtered through a 0.45 µm membrane and injected into the LC-chromatograph. The sugars are eluted from the column (BIORAD HPX-87H) at 26 °C eluted with 0.01 N H2SO4 at 0.6 ml/min, and were detected by refractive index and by UV absorbance, respectively. The solid phase of the column is a polystyrene divinylbenzene ion exchange agent with -SO3 groups as active functions. In this chromatographic system, the compounds eluted in series of decreasing molecular size: polysaccharides and oligosaccharides, trisaccharides, disaccharides and monosaccharides, polyols and alcohols. The electrically charged substances (salts) are excluded from the resin, therefore they elute like polysaccharides in the dead volume.

*High performance liquid chromatography (HPLC)*

Short chained fatty acids (SCFA), mono- and disaccharides were analyzed on a Shimadzu-HPLC fitted with a Biorad Aminex HPX-87H column and using a mobile phase of 0.01 N H2SO4 in HPLC-grade water. Detection was done using Shimadzu RID-20 A (refractive index) and SPD-20 A (UV/VIS) detectors. Flow rate was set at 0.6 mL/min and column oven temperature at 33 °C. All samples were diluted 1:10 with mobile phase before analysis. Preprocessing of the samples consisted of two steps: centrifugation at 12,000 rpm for 10 min at room temperature. The supernatant was subsequently transferred into centrifuge filter tubes which were centrifuged at room temperature for 10 s at 12,000 rpm. Filter inlets were discarded and the filtrate was diluted and analyzed as described above. Long chain fatty acids were analyzed on a second Shimadzu HPLC fitted with a Phenomenex Synergi Hydro RP C18 column and using a methanol:water (85:15, HPLC-grade) mobile phase containing 0.1 % (vol.) formic acid. Compound detection was done through a Shimadzu RID-10 A (refractive index) and a SPD-M20 A (diode array) detector. Flow rate was set at 0.6 mL/min and column oven temperature at 33 °C. Samples were diluted 1:10 in mobile phase before analysis.

Samples from alkaline hydrolysis, which were neutralized with 1 % (vol.) formic acid, were either diluted 1:10 with methanol:water (85:15, HPLC-grade) without addition of formic acid. Alternatively, for higher concentrations, 0.15 mL neutralized sample were diluted with 0.85 mL methanol.

HPLC software used for operation and evaluation was Shimadzu LabSolutions 5.97.

*Hydrolysis*

To analyze the compounds obtained from synthesis, product concentrates were hydrolyzed in a two-step process. First, the presumed ester bonds were exposed to conditions of alkaline pH and elevated temperature, described appropriate for complete hydrolysis of saccharide fatty acid esters (Okumura et al., 2011). After reaction, a sample was taken for HPLC analysis. The pH was then adjusted for the second hydrolysis step, in which glycosidic bonds were enzymatically hydrolyzed using an invertase. To verify both processes, two model compounds with known structure and concentrations were subjected to the treatments: sucrose octaacetate and sucrose monolaurate, solved in isopropanol with a final concentration of 2 g/L and 1 g/L respectively.

*Alkaline hydrolysis*

An alkaline solution of NaOH and deionized water (HPLC grade) was prepared by adding NaOH (8 M) until a pH of 12.7. This pH was chosen to guarantee a pH of at least 12, which was described sufficient for complete hydrolysis of saccharide esters at the applied conditions (Okumura H, Kitazawa N, Wada S, Hotta H. Stability of sucrose fatty acid esters under acidic and basic conditions. J Oleo Sci. 2011;60(6):313-20. doi: 10.5650/jos.60.313. PMID: 21606619.) by accommodating for neutralizing effects of leftover organic acid in samples. Each 20 mL reaction vessel was filled with 10 or 5 mL of the alkaline (pH 12.7) solution. The vessels were placed in the heating blocks on the heater and were then preheated to 70 °C under stirring (150 or 50 rpm, respectively). Subsequently, solved product concentrates (0.8 or 0.4 mL respectively) were added under stirring. The reaction vessels remained open for 10 min, to allow evaporation of the sample

solvent, before being closed with a plug. The plugs were fitted with a syringe needle to allow for pressure equalization. After 120 min reaction time, the reaction was stopped by placing the vessels on ice. If the hydrolyzates were further enzymatically treated, pH in the vessel was adjusted to 5.2 with acetic acid using a pH meter. This was also done for control experiments without any enzyme. In the case of direct analysis without further treatment, pH in the vessels was acidified by adding 1 % (vol.) of formic acid. Controls were adjusted to pH 5.2 with acetic acid or acidified with 1 % (vol.) of formic acid prior to addition of the product concentrate. Until further utilization or analysis reaction samples and controls were stored at 4 °C.

*Enzymatic hydrolysis*

To each alkaline hydrolyzate and control subjected to enzymatic treatment, 11.11 % (vol.) of an 1 M acetate buffer (pH 5.2, adjusted with acetic acid) containing 1 g/L invertase, was added. Controls received 11.11 % (vol.) of an 1 M acetate buffer without invertase enzyme. The vessels were placed into the heating blocks, with heater temperature preliminary adjusted to 39 °C. Two types of control experiments were conducted: one group undergoing heat treatment at 39 °C, the other was stored at 4 °C immediately after addition of the buffer.

Enzymatic hydrolysis was conducted at 10 mL scale only, therefore stirrer speed was 150 pm for each reaction. After 105 min, the reaction was stopped by placing the reaction vessels on ice. All samples from the hydrolysis reactions were preprocessed for HPLC analysis, according to the respective measurement method. Total saccharide hydrolysis during the process was verified beforehand by subjecting a Raftilose P95 solution (2 g/L final concentration) to the treatment.

*Example: esterification of levan*

The process described for Example 4 is repeated for levan. In short, levan (Sigma Aldrich L8647) is reacted in presence of choline chloride in presence of immobilized lipase with lauric acid. Follow-up as described in Example 4.

*Example: Catalytic properties of the levansucrase*

The catalytic properties of the levansucrase from *Bacillus subtilis* were examined for the preparation obtained after PEG-extraction.

***Optimal pH and optimal temperature***

To determine the optimum pH value, the reaction speed was measured at different pH values. For this purpose, a series of 11 buffer solutions were adjusted between pH = 3 and pH = 8 using 1 M $Na_2HPO_4$ and 1 M citric acid. A reaction solution was prepared for each pH with the following components:

| | |
|---|---|
| Sucrose solution 400 g/l : | 0,50 ml |
| 1 M phosphate-citrate buffer : | 0,20 ml |
| Water : | 1,25 ml |

The reaction was started by adding

| | |
|---|---|
| Enzyme solution (13 U/ml) : | 0,05 ml |

and the solutions were incubated at 30°C. Three samples of 50 μl were taken at 10 min intervals and mixed with 200 μl $Na_2CO_3$. From the last solutions, 20 μl were pipetted and mixed with 200 μl Trinder reagent. The Trinder reagent solutions were incubated for 10 min at 30°C and their absorbance was measured at 490 nm. The glucose concentration in enzymatic reaction medium was assessed as a function of time by comparison with similarly treated glucose solutions (0-4 g/l). The reaction rate was calculated as μmol glucose released per minute and ml of enzyme solution.

The pH values were measured in the 11 enzymatic reaction solutions. Figure 3 represents the reaction rate as a function of the pH value. A similar procedure was used to determine the temperature response. Sodium phosphate buffer at pH 6,0 was used instead of citrate-phosphate. Rate of reaction of levansucrase was assessed at 30, 40, 50, 60 and 75°C. The results are shown in Figure 4.

The levansucrase from *Bacillus subtilis* is active over a broad pH range between 5,5 and 7,5. The rate of reaction of levansucrase doubles by increasing the temperature from 30°C to 50°C. At temperatures above 50°C the enzyme is

inactivated.

*Stability of levansucrase*

The levansucrase preparation was stored at 8-10°C. Its pH was 4.7 and stayed stable. The activity determinations over time are presented in Table 6:

Table 6: Stability of the levansucrase preparation at 10°C

| Measurement No | Duration, Months | Activity, U/ml |
|---|---|---|
| 1 | 0 | 12,8 |
| 2 | 3 | 12,8 |
| 3 | 6 | 12,6 |

*Example 2: Balance sheet of the processing*

In Table 7, the overall balance of the work-up is displayed. The amounts involved were calculated positive, the amounts obtained from the chromatographic system were negative. The sum indicated the product after chromatography. Equal sign rules were followed further. About 30% of the solution was lost during freeze-drying, independently on the process.

Table 7: Processing of the Levan oligosaccharides

| | Mass [g] | Oligosacch. [g] | Sugars, [g] | Purity, % | Yield % |
|---|---|---|---|---|---|
| Reaction mixture | 1000 | 148 | 636 | 23 | 100 |
| Eluent | 14800 | 0 | 0 | - | - |
| Recycled fraction | 200 | 48 | 83 | - | - |
| Dead volume | -5150 | 0 | 0 | - | - |
| Recycle 1 | -200 | -48 | -83 | - | - |
| Evaporation | -800 | 0 | 0 | - | - |
| Recycle 2 | -200 | -23 | -31 | 74 | -15 |
| Waste chromat. | -8000 | -14 | -489 | 3 | -9 |
| Deviation | -20 | -0 | 0 | - | - |
| Prod. from chromat. | 1630 | 111 | 117 | 95 | 75 |
| Evaporation | -1305 | 0 | 0 | - | - |
| Addition at desalting | 210 | 0 | 0 | - | - |
| Loss desalt. | -100 | -3 | -3 | 95 | -2 |
| Addition UF | 100 | 0 | 0 | - | - |
| Product solution | 535 | 108 | 113 | 95 | 73 |
| Operational loss | -176 | -35 | -37 | 95 | -24 |
| Freeze drying | -279 | 0 | 0 | - | - |
| Product | 80 | 72 | 76 | 95 | 49 |

The processing of the levan oligosaccharides to a dry preparation of 95% purity is feasible by exclusion chromatography. The expected yield is at least 75%. The white light lyophilizate was compressed into a dense powder in the mortar and placed in 100 ml polyethylene bottles.

*Example 3: Properties of the levan-oliqosaccharides*

The product lay as a white, odorless. slightly hygroscopic lyophilizate. Its bulk density was 400 g/l. From this solid preparation (300 mg) by adding dist. water (200 μl) a 60% (w/w) clear aqueous solution could be prepared. The pH of a 100 g/l solution was around 6, its conductivity around 65 μS/cm. The chemical composition of the preparation was examined.

*HPLC analysis*

The amount of mono- and disaccharides in the sample of levan oligosaccharides was determined by HPLC (BIORAD, HPX-87-H). These data are given in Table 8:

Table 8: Composition of the levan oligosaccharides

| | Amount, % |
|---|---|
| Levan oligosaccharides | 95 |
| Monosaccharides (glucose, fructose, galactose) | 2 |
| Disaccharides (sucrose, galactosyl-fructoside) | 3 |
| Total | 100 |

*Acid hydrolysis*

The composition of monosaccharides was investigated for the levan oligosaccharides. For this purpose, a solution of levan oligosaccharides (10 g/l) was prepared. This solution (1ml) was diluted 1:5 with 0,5 ml 0,1 N $H_2SO_4$ and 3,5 ml water. This dilution was treated 30 min at 100°C. A sample of commercial inulin oligosaccharides (Raftilose P95®) was treated in parallel.

The sugar solutions were analyzed on the one hand by exclusion-HPLC (Biorad HPX-87-H) with RI-detection and on the other hand by ion chromatography with amperometric detection. For the latter, the sugar solutions were diluted 1:40 with water. The solutions were applied to a DIONEX Carbopac PA-1 column. The elution took place in the presence of 0,1 M NaOH with a gradient of sodium acetate. The gradient was shaped from a 0,1 M NaOH solution (A) and a 0,1 M NaOH solution with 1 M NaOAc (B):

| Time, min | A% | B% |
|---|---|---|
| 0 | 98 | 2 |
| 10 | 80 | 20 |
| 20 | 66 | 34 |

At the high pH, the alcohol functions of the sugars are partially ionized as alcoholates. The sugars behave anionic and are retained by the anion exchange phase. The more alcohol functions a molecule carries, the stronger the retention of this molecule on the column. The sugars are thereby eluted by increasing polymerization degree. In addition, the ionizability of the -OH group depends on the overall shape of the molecule. The more ionizable the -OH groups of a sugar are, the more strongly the sugar is held back over the column. A separation of different sugars with the same degree of polymerization is therefore possible. The sugars were detected using pulsating amperometry with a gold electrode. At high pH they are electrochemically oxidized and the oxidation current is measured.

Chromatograms before and after hydrolysis were obtained for the levan oligosaccharides and the commercial inulin oligosaccharides. The chromatogram of levan oligosaccharides before hydrolysis using size exclusion chromatography reflects the composition of the preparation (Table 8). The chromatograms after hydrolysis were used to quantify total monosaccharides in the preparations. The exclusion chromatography yielded the proportion of glucose and the sum (galactose + fructose). The ion chromatography yielded the sum (glucose + galactose) and the proportion of fructose. Table 9 shows the composition of the examined preparations:

Table 9: Monosaccharides in levan oligosaccharides and inulin oligosaccharides

| Mono-saccharides, % | Fructose | Glucose | Galactose |
|---|---|---|---|
| Levan oligosaccharide | 90 | 7 | 3 |

(continued)

| Mono-saccharides, % | Fructose | Glucose | Galactose |
|---|---|---|---|
| Fructo-oligosaccharide | 85 | 15 | 0 |

The sample of levan oligosaccharides consists predominantly of fructose moieties. Further, glucose and galactose are present.

*Degree of polymerization and structure*

The ratio fructose / (glucose + galactose) indicate an intermediate degree of polymerization of the levan oligosaccharides around 10. The degree of polymerization of the individual oligosaccharides is between 3 and 15. It is planned to confirm these data by further chromatographic investigations.

The proportion of galactose in the final product is low compared to glucose. The reaction with galactose as acceptor was derived from previous results with the levansucrase derived from *Microbacterium laevaniformans.* The presence of galactose in the reaction medium was necessary for obtaining levan oligosaccharides. The acceptor effect of sucrose was with the levansucrase from *Bacillus subtilis* better. The reaction process with only sucrose as a donor as well as an acceptor was successfully tested in the test tube.

*Levan-oligosaccharides: Technical specifications*

Organoleptic properties: White, slightly hygroscopic, slightly sweet, odorless lyophilizate

| | |
|---|---|
| Reference : | LO 980312 |
| Weight : | 51 g |

**Physical properties**

| | |
|---|---|
| Bulk Density : | 400 g/l |
| Solubility (25°C) : | 60% (w/w) |

**Properties of a solution in dist. Water (100g/l)**

| | |
|---|---|
| Appearance : | Colorless solution |
| pH : | 6 |
| Conductivity : | 65 $\mu$S/cm |

**Composition (related to dry matter)**

| | |
|---|---|
| Levan-oligosaccharides : | 95 % |
| Free monosaccharides (glucose, fructose, galactose) : | 2 % |
| Free Disaccharides (sucrose, galactosyl-fructoside, ...) : | 3 % |

**Properties of the levan-oligosaccharides**

| | |
|---|---|
| Galactose monosaccharide units : | 3 % |
| Glucose monosaccharide units : | 7 % |
| Fructose monosaccharide units : | 90 % |
| Degree of Polymerization (DP) : | 3-15 |

*Example 4: Activity of the compounds* as *prebiotics*

According to the "International Scientific Association for Probiotics and Prebiotics (ISAPP)", the current consensus definition of a prebiotic is: "a substrate that is selectively utilized by host microorganisms conferring a health benefit". Thus, the concept includes three essential parts: a substance, a physiologically beneficial effect, and a microbiota-mediated mechanism (Gibson GR, Hutkins R, Sanders ME, Prescott SL, Reimer RA, Salminen SJ, Scott K, Stanton C, Swanson KS, Cani PD, Verbeke K, Reid G. Expert consensus document: The International Scientific Association for Probiotics and Prebiotics (ISAPP) consensus statement on the definition and scope of prebiotics. Nat Rev Gastroenterol Hepatol. 2017 Aug;14(8):491-502. doi: 10.1038/nrgastro.2017.75. Epub 2017 Jun 14. PMID: 28611480.).

The compounds presented in this work possess the properties of prebiotics:

1) Due to the β(2-1) and β(2-6) linkages in the oligosaccharide chain, they cannot be hydrolyzed by host's enzymes and can serve as substrate for the host's microbiome

2) The application as feed showed positive effects of the compounds on animal growth. It can be derived that the compounds conferred health benefits to the test animals.
In addition, due to the substitution by functional groups, they may display further functionalities:

3) Depending on substituent the fFOS may have further function regrading microbiome, not only a substrate but also as a selective inhibitor

4) Depending on substituent the fFOS may have direct action on gut wall metabolism, not only mediated by microorganism or mediated by microorganisms only for the ester bond hydrolysis.

To summarize, the molecules of the invention correspond to the definition of prebiotics and include further functions. They represent a new class of compounds with enhanced prebiotic properties.

All scientific publications and patent documents cited in the present specification are incorporated by reference herein.

## Claims

1. A compound described by a formula (I)

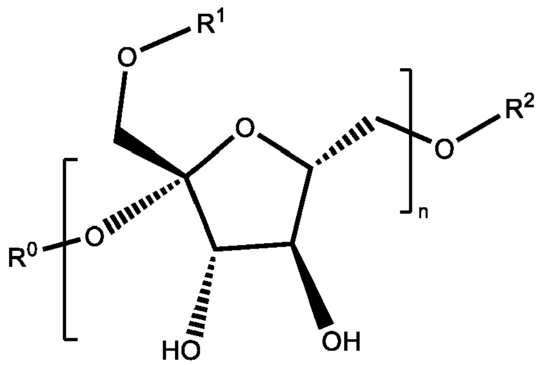

(I)

wherein

- $R^0$ is selected from H and a carbohydrate moiety selected from

    - ◦ the group of glucose, galactose, maltose, lactose, and wherein the carbohydrate optionally may be modified with $R^2$ at a primary OH group comprised in the carbohydrate moiety; or
    - ◦ the group of xylose, arabinose;

- each $R^1$ is independently selected from the group of H, a moiety of formula (II) and an ester moiety;

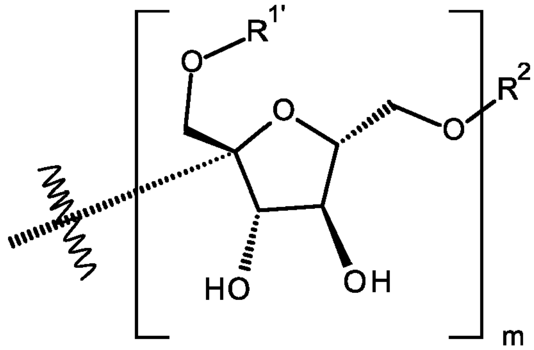

(II)

wherein

- ◦ $R^{1'}$ has the same definition as $R^1$;
- ◦ m is an integer selected from the group of 0 to 59;
- ◦ said ester moiety is an ester of a moiety selected from the group of a fatty acid, an unsubstituted benzoic acid, an OH-substituted benzoic acid, and a dicarboxylic acid;

- $R^2$ is selected from the group of H, and an ester moiety;
- n is an integer selected from 1 to 60;

wherein

- the degree of polymerization of said compound is 4 to 60;
- the degree of substitution of said compound with the ester moiety is 0.2 to 1.0;
- the degree of branching of said compound is 0.0 to 0.8.

**2.** The compound according to claim 1, wherein said ester moiety is of formula (III)

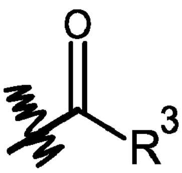

(III)

wherein

- $R^3$ is selected from the group of

    - ◦ $-(CH_2)_p-CH_3$ with p being an integer selected from 0, 1, 2, 3, 4, 5, 6, 7, 8, 9, 10, 11, 12, 13, 14, 15, 16, 17;
    - ◦ an unsubstituted or OH-substituted phenyl, particularly an unsubstituted or OH-monosubstituted phenyl;
    - ◦ $-CH_2-CH_2-COO^-$;
    - ◦ $-(CH_2)_q-(CH=CH-(CH_2))_r-(CH_2)_s-CH_3$ with q being an integer selected from 3, 4, 5, 6,7, 8, 9 and with r being an integer selected from 1, 2, 3, 4, 5 and with s being an integer selected from 0, 1, 2, 3, 4, 5, 6, 7;

**3.** The compound according to any one of the preceding claims 2 to 3, wherein $R^3$ is selected from the group of phenyl, $-CH_2-CH_2-COO^-$, and $-(CH_2)_p-CH_3$ with p being an integer selected from the group of 0, 1, 2, 6, 10, particularly $R^3$ is $-(CH_2)_2-CH_3$.

**4.** The compound according to any one of the preceding claims, wherein

- the degree of polymerization of said compound is 4 to 30, particularly wherein the degree of polymerization of said compound is 4 to 10, more particularly wherein the degree of polymerization of said compound is 8 to 15; and/or
- the degree of substitution of said compound with formula (III) is 0.2 to 0.6, particularly wherein the degree of substitution of said compound with formula (III) is 0.3 to 0.4; and/or
- the degree of branching of said compound is 0.0 to 0.5, particularly wherein the degree of branching of said compound is 0.1 to 0.3.

**5.** Use of the compound according to any one of the preceding claims in preparation of a feed, particularly wherein the feed is administered to monogastric animals.

**6.** Use of the compound according to any one of the preceding claims 1 to 4 as a prebiotic.

**7.** A method for production of the compound according to any one of claims 1 to 4, said method comprising the steps:

a. providing levan, wherein the levan is described by formula (Ia):

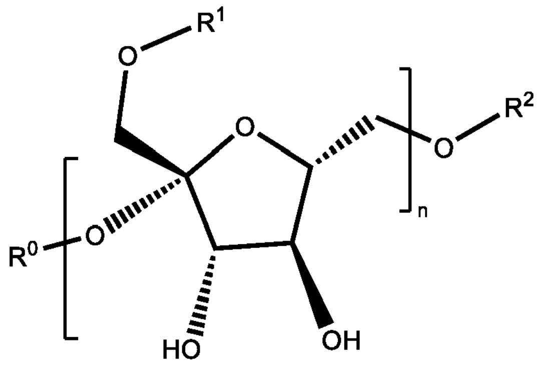

(Ia)

wherein

- $R^0$ is selected from H and a carbohydrate, wherein the carbohydrate comprises a primary OH group and wherein the carbohydrate is selected from the group of glucose, galactose, xylose, arabinose, maltose, lactose, and wherein the carbohydrate optionally may be modified with $R^2$ at the primary OH group;
- $R^2$ is H;
- n is an integer selected from 1 to 60;
- each $R^1$ is independently selected from the group of H and a moiety of formula (IIa);

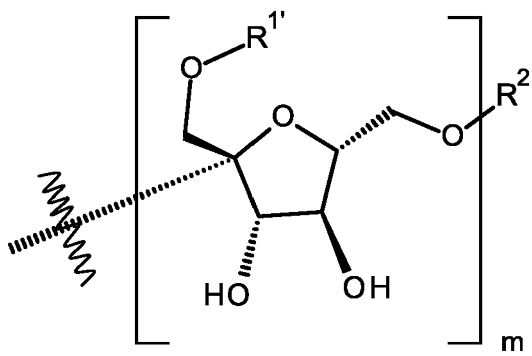

(IIa)

wherein
- $R^{1'}$ has the same definition as $R^1$;
- m is an integer selected from the group of 0 to 59;

b. adding:

i. a carboxylic moiety selected from the group of a fatty acid, an unsubstituted benzoic acid, an OH-substituted benzoic acid, and a dicarboxylic acid;
ii. a triacylglycerol lipase enzyme (EC 3.1.1.3);

c. in a reaction step, permitting a reaction of the levan with the fatty acid in a reaction medium yielding a modified levan;
d. in an extraction step, optionally, extracting the modified levan.

**8.** The method according to claim 7, wherein the triacylglycerol lipase enzyme is derived from a species selected from the group of *C. antarctica* (UniProt-ID: P41365), *R. oryzae* (UniProt-ID: P61872), *R. miehei* (UniProt-ID: P19515), *T. lanuginosus* (LIP, Uni-Prot-ID: O59952), *A. niger* (lipB, Uni-Prot-ID: Q0PW43), *B. cepacian* (UniProt-ID: A0A0N9HLH6).

**9.** The method according to any one of claims 7 to 8, wherein the reaction medium of the reaction step comprises

- ~8% (w/w) of levan.
- -10% (w/w) of the triacylglycerol lipase enzyme.
- -12% (w/w) of the carboxylic moiety;
- a ternary alcohol, particularly the reaction medium consists of >30% (w/w) of a ternary alcohol, more particularly the reaction medium consists of -43% (w/w) of a ternary alcohol, most particularly the reaction medium consists of -43% (w/w) of 2-methyl-2-butanol;
- 10-30% (w/w) of a polar organic solvent, particularly wherein the reaction medium of the reaction step comprises -15% (w/w) of a polar organic reaction solvent, more particularly the reaction medium comprises -15% (w/w) of DMSO.

**10.** The method according to any one of claims 7 to 9, wherein the reaction medium of the reaction step has a water activity of <0.2, particularly of <0.1.

**11.** The method according to any one of claims 7 to 10, wherein -12% (w/w) of a molecular sieve is present in the reaction medium, particularly wherein the molecular sieve is zeolite.

**12.** The method according to any one of claims 7 to 11, wherein the carboxylic moiety is in an activated form of a carboxylic acid, particularly the carboxylic moiety is a vinyl ester of a carboxylic acid.

**13.** The method according to any one of claims 7 to 8, wherein the reaction medium of the reaction step comprises Deep Eutectic Solvents (DES), particularly wherein the reaction medium comprises choline chloride and lauric acid, more particularly wherein the reaction medium comprises -50% (w/w) choline chloride and -10% (w/w) lauric acid.

**14.** The method according to any one of claims 7 to 13, wherein the levan is provided by a method comprising the following steps:

a. providing saccharose;
b. in a fructosyltransferase step, permitting a reaction of the saccharose catalyzed by a levansucrase enzyme (EC 2.4.1.10) yielding levan;
c. in an extraction step, optionally, extracting the levan.

**15.** The method according to claim 14, wherein the levansucrase enzyme is derived from a species selected from the group of *B. subtilis* (UniProt-ID: P05655, Gene-ID: 936413), *M. laevaniformans, E. amylovora* (Isc, UniProt-ID: Q46654), *Z. mobilis* (sacB, UniProt-ID: P0DJA3), *A. xylinum, R. aquatilis, P. fluorescens* (sacB, UniProt-ID: J2EX98), *B. polymyoa* (sacB, UniProt-ID: A0A0F0FYF1).

Fig. 1

A

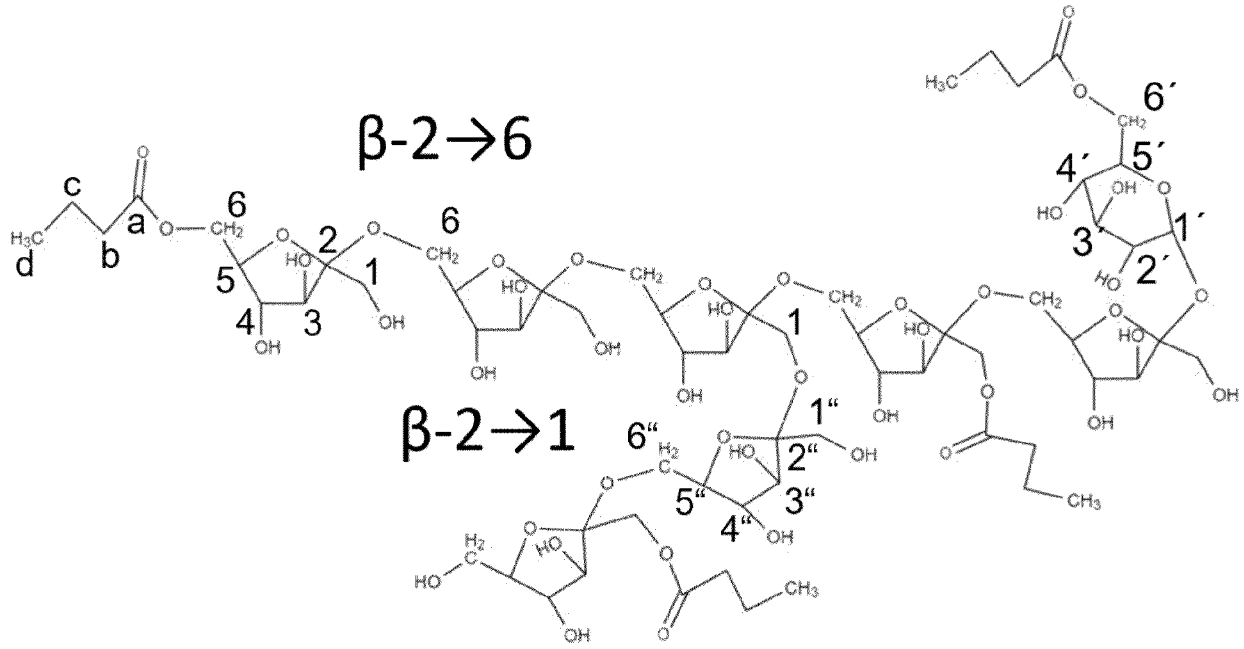


B

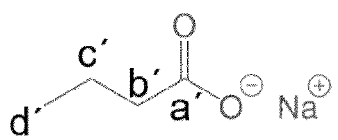

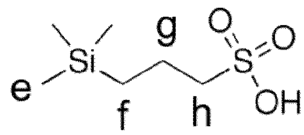

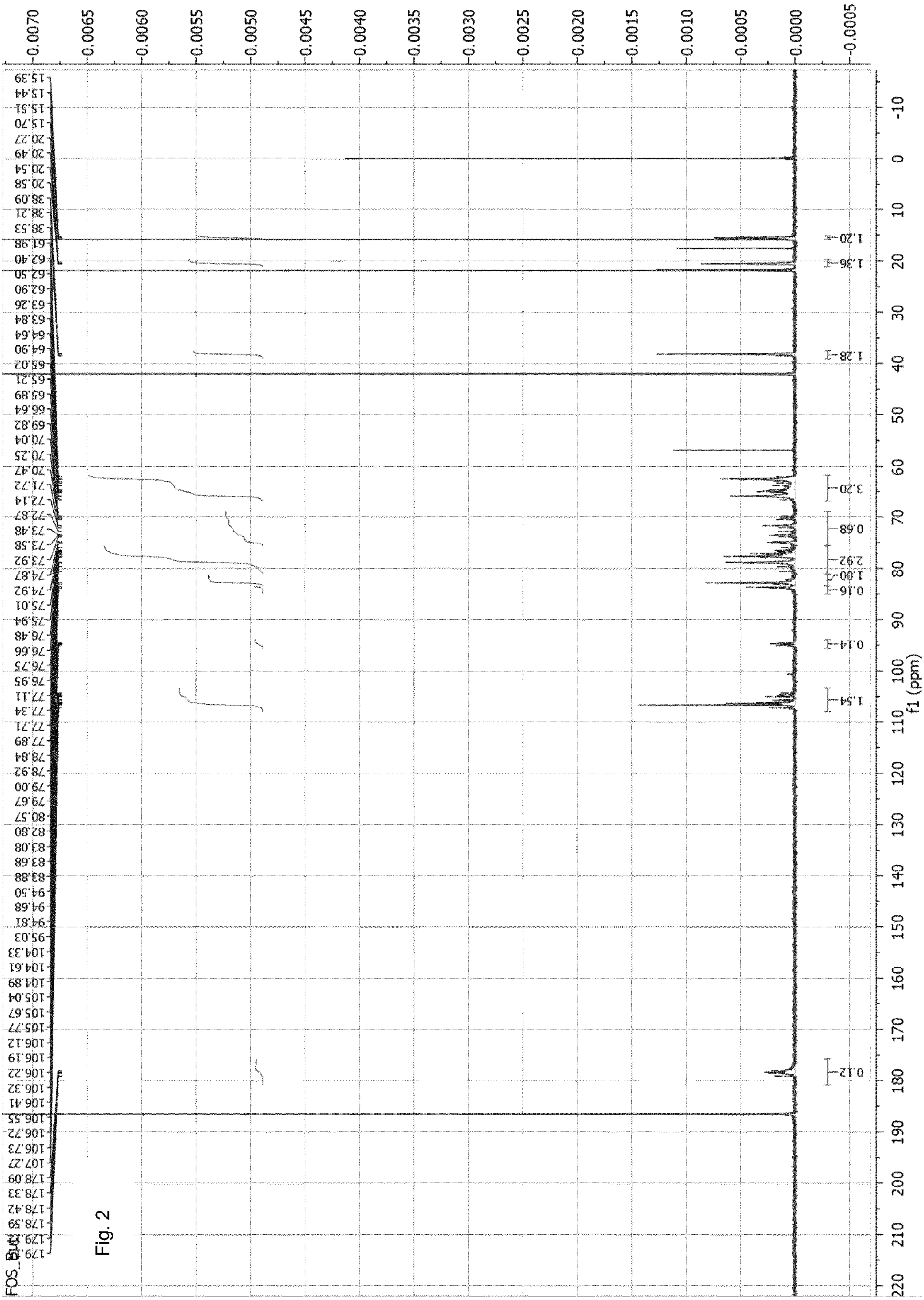


Fig. 2

Fig. 3

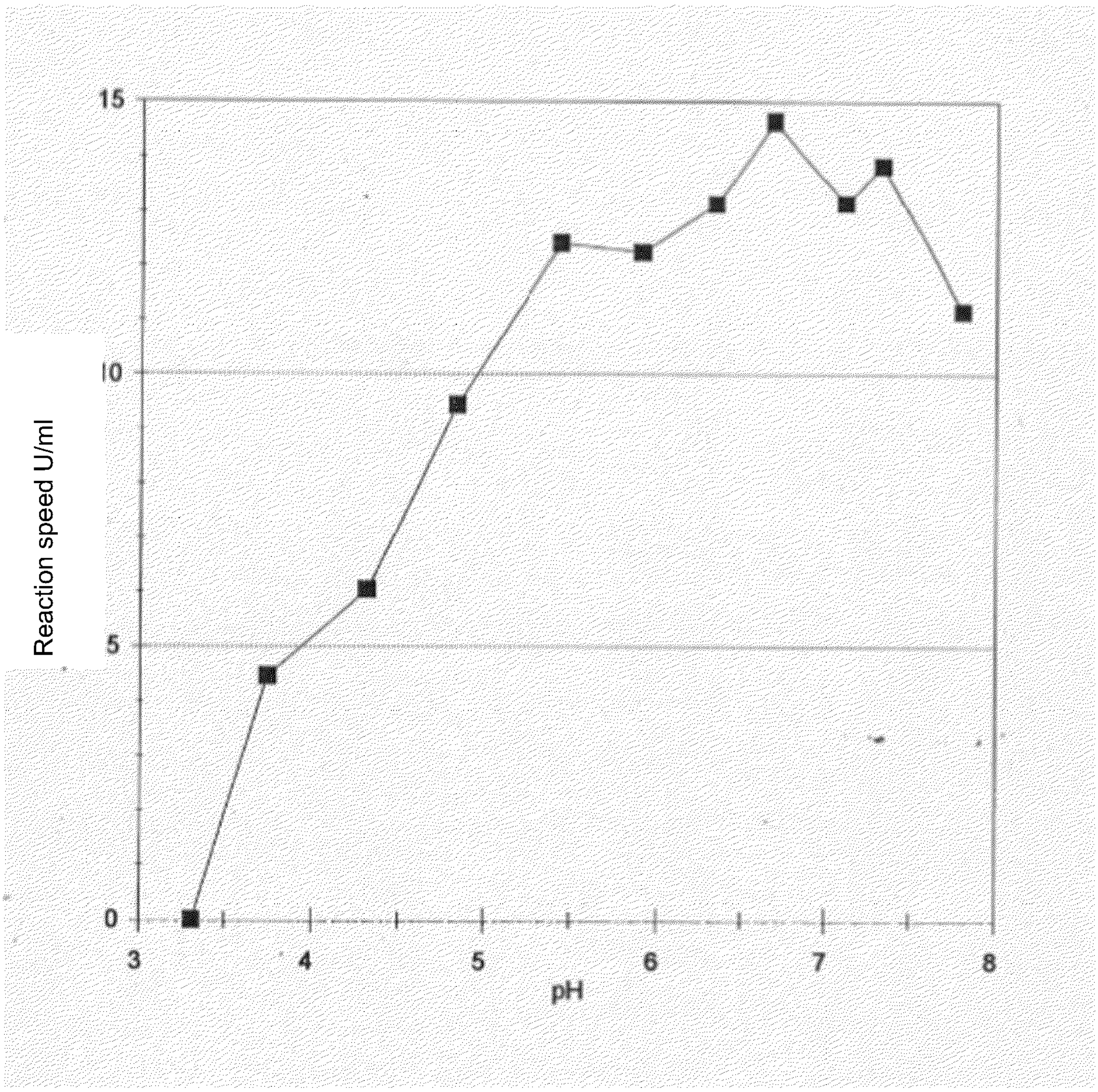

Fig. 4

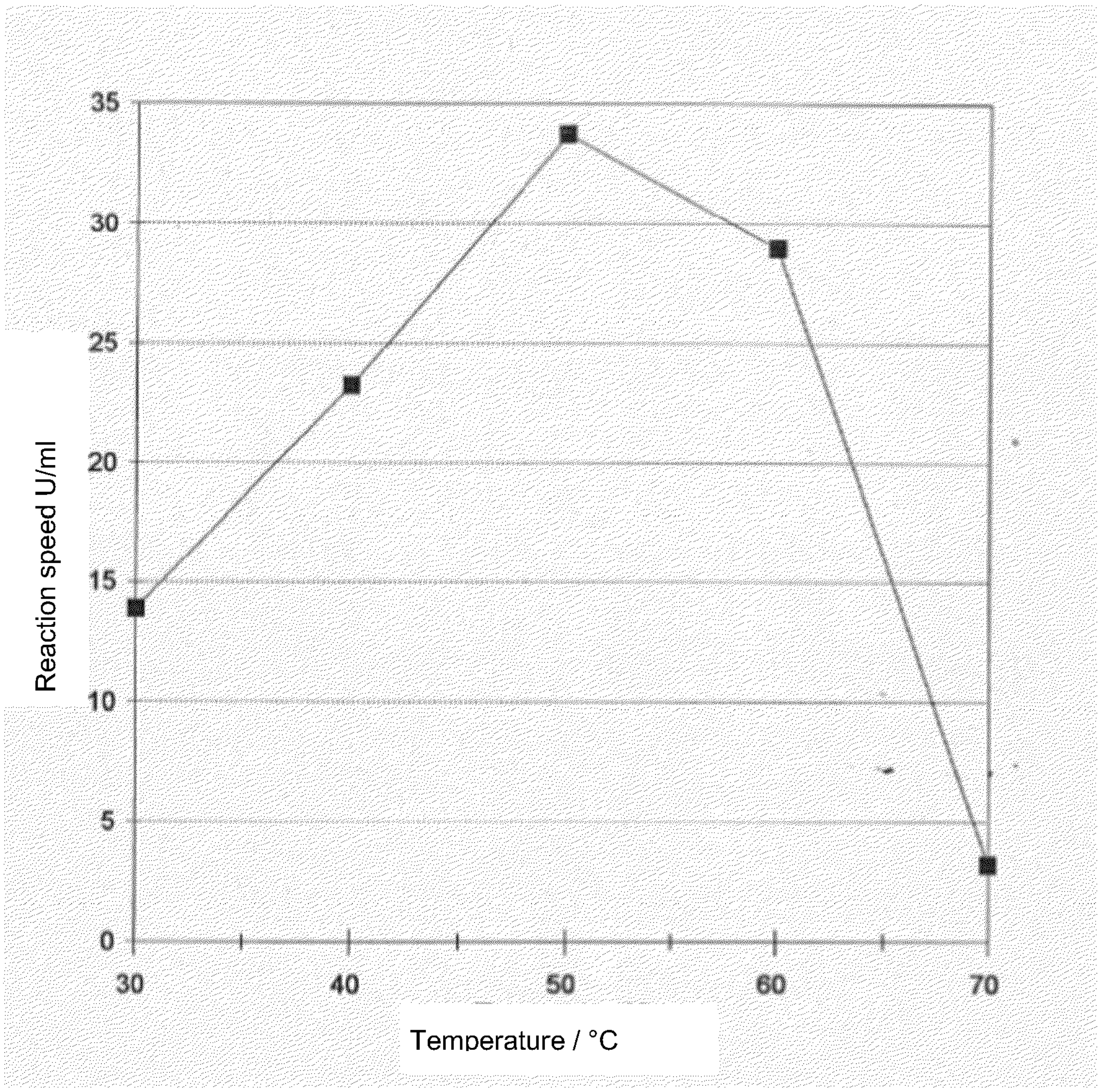
35
30
25
20
15
10
5
0
Reaction speed U/ml
30
40
50
60
70
Temperature / °C

Europäisches Patentamt
European Patent Office
Office européen des brevets

# EUROPEAN SEARCH REPORT

Application Number
EP 24 18 3823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 3 413 284 A (HORST GROTSCH ET AL)<br>26 November 1968 (1968-11-26)<br>* claim 1 * | 1,4<br><br>2,3,5-15 | INV.<br>C08B37/00<br>A61K31/733 |
| Y | JP 6 286138 B2 (CHIBA FLOUR MILLING)<br>28 February 2018 (2018-02-28)<br>* the whole document * | 2,3,5-15 | |
| Y | US 11 096 951 B2 (BIFIDO CO LTD [KR])<br>24 August 2021 (2021-08-24)<br>* the whole document * | 2,3,5-15 | |
| Y | KANG SINI ET AL: "Production, Structural Characterization, and In Vitro Assessment of the Prebiotic Potential of Butyl-Fructooligosaccharides",<br>INTERNATIONAL JOURNAL OF MOLECULAR SCIENCES,<br>vol. 21, no. 2,<br>10 January 2020 (2020-01-10), page 445,<br>XP093222056,<br>Basel, CH<br>ISSN: 1422-0067, DOI: 10.3390/ijms21020445<br>* the whole document * | 2,3,5-15 | TECHNICAL FIELDS SEARCHED (IPC)<br>C08B<br>A61K |
| Y | CHIANG CHUNG-JEN ET AL: "Enhanced levan production using chitin-binding domain fused levansucrase immobilized on chitin beads",<br>APPLIED MICROBIOLOGY AND BIOTECHNOLOGY,<br>SPRINGER BERLIN HEIDELBERG, BERLIN/HEIDELBERG,<br>vol. 82, no. 3, 1 March 2009 (2009-03-01),<br>pages 445-451, XP037016459,<br>ISSN: 0175-7598, DOI:<br>10.1007/S00253-008-1772-Z<br>[retrieved on 2009-03-01]<br>* the whole document *<br><br>-/-- | 2,3,5-15 | |

The present search report has been drawn up for all claims

1

| Place of search | Date of completion of the search | Examiner |
|---|---|---|
| Munich | 7 November 2024 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 18 3823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | POLAT T ET AL: "SYNTHESES AND APPLICATIONS OF SUCROSE-BASED ESTERS", JOURNAL OF SURFACTANTS AND DETERGENTS : JSD ; A JOURNAL OF THE AMERICAN OIL CHEMISTS' SOCIETY, WILEY, vol. 4, no. 4, 1 October 2001 (2001-10-01) , pages 415-421, XP001110315, ISSN: 1097-3958, DOI: 10.1007/S11743-001-0196-Y<br>* the whole document *<br>----- | 2,3,5-15 | |
| Y | HOU YUANYUAN ET AL: "Abstract", POLYMER INTERNATIONAL, vol. 70, no. 2, 22 September 2020 (2020-09-22), pages 185-192, XP093221984, GB ISSN: 0959-8103, DOI: 10.1002/pi.6112 Retrieved from the Internet: URL:https://onlinelibrary.wiley.com/doi/full-xml/10.1002/pi.6112><br>* the whole document *<br>----- | 2,3,5-15 | TECHNICAL FIELDS SEARCHED (IPC) |
| Y | Ballesteros A. ET AL: "Enzymatic Synthesis of Sugar <mark>Esters and Oligosaccharides from Renewable Resources</mark>" In: "Biocatalysis in the Pharmaceutical and Biotechnology Industries", 1 January 2007 (2007-01-01), CRC Press, XP093221911, ISBN: 978-0-8493-3732-1 pages 483-508, DOI: 10.1201/9781420019377-21,<br>* the whole document *<br>-----<br>-/-- | 2,3,5-15 | |

The present search report has been drawn up for all claims

1

| Place of search | Date of completion of the search | Examiner |
|---|---|---|
| Munich | 7 November 2024 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 18 3823

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BARBOSA OVEIMAR ET AL: "Strategies for the one-step immobilization-purification of enzymes as industrial biocatalysts", BIOTECHNOLOGY ADVANCES., vol. 33, no. 5, 1 September 2015 (2015-09-01), pages 435-456, XP093125057, GB ISSN: 0734-9750, DOI: 10.1016/j.biotechadv.2015.03.006 * the whole document * ----- | 2,3,5-15 | |

TECHNICAL FIELDS SEARCHED (IPC)

The present search report has been drawn up for all claims

1

| Place of search | Date of completion of the search | Examiner |
|---|---|---|
| Munich | 7 November 2024 | Friedrich, Christof |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 18 3823

This annex lists the patent family members relating to the patent documents cited in the above-mentioned European search report. The members are as contained in the European Patent Office EDP file on The European Patent Office is in no way liable for these particulars which are merely given for the purpose of information.

07-11-2024

| Patent document cited in search report | Publication date | Patent family member(s) | Publication date |
|---|---|---|---|
| US 3413284 A | 26-11-1968 | AT 255029 B | 26-06-1967 |
| | | BE 658141 A | 12-07-1965 |
| | | CH 448999 A | 31-12-1967 |
| | | DE 1300668 B | 07-08-1969 |
| | | DK 115884 B | 17-11-1969 |
| | | FR 4353 M | 16-08-1966 |
| | | FR 4354 M | 16-08-1966 |
| | | GB 1078012 A | 02-08-1967 |
| | | NL 6500204 A | 12-07-1965 |
| | | SE 318404 B | 08-12-1969 |
| | | US 3413284 A | 26-11-1968 |
| JP 6286138 B2 | 28-02-2018 | JP 6286138 B2 | 28-02-2018 |
| | | JP 2014221755 A | 27-11-2014 |
| US 11096951 B2 | 24-08-2021 | KR 20190128347 A | 18-11-2019 |
| | | US 2019343857 A1 | 14-11-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SAMBROOK et al.** Molecular Cloning: A Laboratory Manual. Cold Spring Harbor Laboratory Press, 2012
- **AUSUBEL et al.** Short Protocols in Molecular Biology. John Wiley & Sons, Inc., 2002
- **OKUMURA H** ; **KITAZAWA N** ; **WADA S** ; **HOTTA H.** Stability of sucrose fatty acid esters under acidic and basic conditions. *J Oleo Sci.*, 2011, vol. 60 (6), 313-20
- **GIBSON GR** ; **HUTKINS R** ; **SANDERS ME** ; **PRESCOTT SL** ; **REIMER RA** ; **SALMINEN SJ** ; **SCOTT K** ; **STANTON C** ; **SWANSON KS** ; **CANI PD**. Expert consensus document: The International Scientific Association for Probiotics and Prebiotics (ISAPP) consensus statement on the definition and scope of prebiotics. *Nat Rev Gastroenterol Hepatol.*, 14 June 2017, vol. 14 (8), 491-502